# EUROPEAN PATENT APPLICATION

(11) **EP 4 387 189 A1**
(43) Date of publication of application: **19.06.2024**
(21) Application number: 22862769.1
(22) Date of filing: 01.06.2022
(51) Int. Cl.: H04L 45/16

(54) **PACKET FORWARDING METHOD, APPARATUS, DEVICE, AND STORAGE MEDIUM**

(30) Priority: 02.09.2021 CN 202111026417; 28.10.2021 CN 202111266438
(71) Applicant: Huawei Technologies Co., Ltd., Shenzhen, Guangdong 518129 (CN)
(72) Inventor: XIE, Jingrong, Shenzhen, Guangdong 518129 (CN); DUAN, Fanghong, Shenzhen, Guangdong 518129 (CN); ZHANG, Feng, Shenzhen, Guangdong 518129 (CN); DING, Zhaoqiu, Shenzhen, Guangdong 518129 (CN)
(74) Representative: Maiwald GmbH
(86) International application number: PCT/CN2022/096579
(87) International publication number: WO 2023/029627

(57) **Abstract**

This application provides a packet forwarding method and apparatus, a device, and a storage medium, and pertains to the field of communication technologies. In embodiments of this application, in a scenario in which a BIER domain includes a host and a routing device that has a neighbor relationship with the host, and the host duplicates a packet and forwards the packet to another host via the routing device, when receiving the packet including a BIER option, the routing device pops up, from the packet, an IPv6 extension header including the BIER option, and then sends the packet to the host, to avoid a case in which the packet received by the host includes the IPv6 extension header including the BIER option, thereby reducing a difficulty of processing the packet by the host, and reducing overheads of processing the packet by the host.

## Description

This application claims priorities to Chinese Patent Application No. 202111026417.1, filed on September 2, 2021 and entitled "PACKET DUPLICATION AND RECEIVING METHOD AND SYSTEM", and to Chinese Patent Application No. 202111266438.0, filed on October 28, 2021 and entitled "PACKET FORWARDING METHOD AND APPARATUS, DEVICE, AND STORAGE MEDIUM", both of which are incorporated herein by reference in their entireties.

### TECHNICAL FIELD

This application relates to the field of communication technologies, and in particular, to a packet forwarding method and apparatus, a device, and a storage medium.

### BACKGROUND

As a technology used to construct a forwarding path of a multicast packet in the communication field, bit index explicit replication (bit index explicit replication, BIER) is widely applied because no multicast distribution tree needs to be constructed.

In the conventional technology, in a BIER network including a host and a network device, a basic process of forwarding a BIER packet is as follows: A source host generates a BIER internet protocol version 6 (internet protocol version 6, IPv6) packet, and sends the BIER IPv6 packet to the network device. After receiving the BIER IPv6 packet, the network device duplicates the BIER IPv6 packet and forwards the BIER IPv6 packet to a destination host. The destination host receives the BIER IPv6 packet and processes the BIER IPv6 packet.

According to the foregoing method, it is extremely difficult for the destination host to process the packet after receiving the packet, and overheads are excessively high.

### SUMMARY

Embodiments of this application provide a packet forwarding method and apparatus, a device, and a storage medium, to reduce a difficulty and overheads of processing a packet by a destination host. The technical solution is as follows:
According to a first aspect, a packet forwarding method is provided. An example in which a first routing device performs the method is used. The method includes: The first routing device receives a first packet; the first routing device obtains a second packet based on the first packet; and the first routing device sends the second packet to a first host serving as a BIER neighbor.

The first packet is, for example, a BIER over IPv6 data plane (bit index explicit replication over IPv6 data plane, BIERv6) packet. The first packet includes a first internet protocol version 6 (internet protocol version 6, IPv6) header, a first IPv6 extension header, an upper-layer header, and an upper-layer payload. The first IPv6 extension header includes a bit index explicit replication (bit index explicit replication, BIER) option.

The second packet is equivalent to a packet obtained by popping up, from the first packet, the IPv6 extension header including the BIER option. The second packet includes the upper-layer header, the upper-layer payload, and a second IPv6 header obtained based on the first IPv6 header.

The first host is the BIER neighbor of the first routing device. For example, the BFR neighbor in a bit index forwarding table (bit index forwarding table, BIFT) on the first routing device includes the first host.

The first routing device performs the foregoing method to convert the first packet into the second packet, and then sends the second packet to a destination host serving as a neighbor, to prevent the destination host from receiving the IPv6 extension header including the BIER option, thereby resolving problems of excessively high difficulty and excessively high overheads caused when the destination host receives the IPv6 extension header including the BIER option. This reduces a difficulty of processing the packet by the destination host, and reduces overheads of processing the packet by the destination host.

Optionally, the BIER option in the first packet includes a bitstring, and a process in which the first routing device obtains the second packet specifically includes: The first routing device obtains indication information based on the bitstring, where the indication information indicates to pop up the first IPv6 extension header including the BIER option; and the first routing device obtains the second packet based on the indication information and the first packet.

In the foregoing optional manner, because the bitstring is associated with the information indicating an action of popping up, in a process of forwarding a packet according to a standard BIERv6 forwarding process, the routing device can determine, based on the bitstring in the packet, that a next hop is the first host, and perform the action of popping up as indicated by the indication information associated with the bitstring, thereby fully utilizing a BIER technology feature of including the bitstring in the packet to indicate the destination host, thereby reducing implementation complexity and reducing a configuration workload.

Optionally, that the first routing device obtains indication information based on the bitstring includes: The first routing device obtains an identifier of the first host based on the bitstring; and the first routing device obtains the indication information based on a correspondence and the identifier of the first host, where the correspondence includes the indication information and the identifier of the first host.

Optionally, the upper-layer header is a user datagram protocol (user datagram protocol, UDP) header, and the upper-layer payload is a UDP payload.

Optionally, the UDP payload does not include an IP header.

Optionally, a value of a checksum field in the UDP header of the first packet and a value of a checksum field in the UDP header the second packet are both 0.

In the foregoing implementation, in a process of forwarding a packet, the first routing device does not need to recalculate checksum in the UDP header, but only needs to keep the value of the checksum field in the UDP header as 0, thereby reducing overheads caused by checksum calculation.

Optionally, the first packet further includes at least one second IPv6 extension header, the at least one second IPv6 extension header included in the first packet is encapsulated between the first IPv6 header and the upper-layer header, the second packet further includes the at least one second IPv6 extension header, and the at least one second IPv6 extension header included in the second packet is encapsulated between the second IPv6 header and the upper-layer header.

The at least one second IPv6 extension header does not include the BIER option. For example, the second IPv6 extension header includes but is not limited to a fragment header (fragment header), an encapsulating security payload header (encapsulating security payload, ESP), an authentication header, a routing header, a hop-by-hop options header, a destination options header, and the like.

The foregoing implementation is compatible with a mechanism for implementing a feature by using another IPv6 extension header, and is therefore applicable to more service scenarios. For example, in a scenario of fragmentation and reassembly of an IPv6 packet, the second IPv6 extension header is, for example, the fragment header, and the fragment header is forwarded to the first host by the first routing device, so that the first host performs reassembly based on a packet fragment that carries the fragment header.

Optionally, the BIER option of the first packet includes the bitstring, the bitstring includes a first bit corresponding to the identifier of the first host, and the first bit in the bitstring is set. Before receiving the first packet, the first routing device advertises the identifier of the first host between routing devices in a BIER domain.

In the foregoing implementation, the first routing device acts as a proxy node to advertise the identifier of the first host on behalf of the first host. In this case, when the first host does not support BIER forwarding behavior, the identifier of the first host can be diffused to another routing device, so that the another routing device generates routing information about arriving at the first host. In addition, the identifier of the first host does not need to be configured on each routing device in the BIER domain, thereby reducing a configuration workload and facilitating large-scale deployment.

Optionally, that the first routing device advertises the identifier of the first host between routing devices in a BIER domain includes:
The first routing device generates a routing protocol packet. The routing protocol packet includes the identifier of the first host. The first routing device advertises the routing protocol packet between the routing devices in the BIER domain.

The routing protocol packet is, for example, an intermediate system to intermediate system (intermediate system to intermediate system, IS-IS) packet, an (open shortest path first, OSPF) packet, or a border gateway protocol (border gateway protocol, BGP) packet.

In the foregoing implementation, an existing routing protocol can be reused, thereby making deployment and management simple.

According to a second aspect, a packet forwarding method is provided. An example in which a first routing device performs the method is used. The method includes: The first routing device receives a first packet; the first routing device obtains a second packet based on the first packet; and the first routing device sends the second packet to a first host serving as a BIER neighbor.

The first packet is, for example, a BIERv6 packet. The first packet includes a first IPv6 header, a first IPv6 extension header, an upper-layer header, and an upper-layer payload. The first IPv6 extension header includes a BIER option.

The second packet is equivalent to a packet obtained by popping up, from the first packet, the IPv6 extension header including the BIER option and converting an IPv6 header into an IPv4 header. The second packet includes the upper-layer header, the upper-layer payload, and the IPv4 header obtained based on the IPv6 header.

The first routing device performs the foregoing method to convert the first packet into the second packet, and then sends the second packet to a destination host serving as a neighbor, to prevent the destination host from receiving the IPv6 extension header including the BIER option, thereby resolving problems of excessively high difficulty and excessively high overheads caused when the destination host receives the IPv6 extension header including the BIER option. This reduces a difficulty of processing the packet by the destination host, and reduces overheads of processing the packet by the destination host.

Further, when the first host supports IPv4 but not IPv6, or a network between the first routing device and the first host supports IPv4 but not IPv6, a communication requirement of the first host can also be met. This facilitates compatibility with an IPv4 network.

Optionally, the BIER option includes a bitstring, and that the first routing device obtains a second packet based on the first packet includes:
The first routing device obtains indication information and an IPv4 address of the first host based on the bitstring, where the indication information indicates the first IPv6 extension header including the BIER option and indicates to replace the IPv6 header with the IPv4 header.

The first routing device obtains the second packet based on the indication information, the IPv4 address of the first host, and the first packet, where a destination address in the IPv4 header of the second packet is the IPv4 address of the first host.

Optionally, that the first routing device obtains indication information and an IPv4 address of the first host based on the bitstring includes:
The first routing device obtains an identifier of the first host based on the bitstring;
The first routing device obtains the indication information and the IPv4 address of the first host based on a first correspondence and the identifier of the first host, where the first correspondence includes the indication information, the identifier of the first host, and the IPv4 address of the first host.

Optionally, the upper-layer header is a UDP header, and the upper-layer payload is a UDP payload.

Optionally, the UDP payload does not include an IP header.

Optionally, a value of a checksum field in the UDP header is 0.

Optionally, the first packet further includes at least one second IPv6 extension header, and the at least one second IPv6 extension header in the first packet is encapsulated between the IPv6 header and the upper-layer header.

Optionally, the BIER option of the first packet includes the bitstring, the bitstring includes a first bit corresponding to the identifier of the first host, and the first bit in the bitstring is set. Before the first routing device receives the first packet, the method further includes: The first routing device advertises the identifier of the first host between routing devices in a BIER domain.

In the foregoing implementation, the first routing device acts as a proxy node to advertise the identifier of the first host on behalf of the first host. In this case, when the first host does not support BIER forwarding behavior, the identifier of the first host can be diffused to another routing device, so that the another routing device generates routing information about arriving at the first host. In addition, the identifier of the first host does not need to be configured on each routing device in the BIER domain, thereby reducing a configuration workload and facilitating large-scale deployment.

Optionally, the method further includes: The first routing device advertises, between the routing devices in the BIER domain, a correspondence between an IPv6 address of the first host and the IPv4 address of the first host.

In the foregoing implementation, the correspondence between the IPv6 address of the first host and the IPv4 address of the first host can be diffused to another routing device in the BIER domain. This helps meet a requirement of communication between the first host and an IPv4 host based on a BIERv6 forwarding technology. For example, after the first host sends a BIERv6 packet, a neighboring routing device of a target IPv4 host can convert, based on the correspondence between the IPv6 address of the first host and the IPv4 address of the first host, the IPv6 header of a packet sent by the first host into the IPv4 header, and then forward the IPv4 header to the target IPv4 host, so that the target IPv4 host receives the packet based on the IPv4.

Optionally, a source address in the IPv6 header of the first packet is an IPv6 address of a second host, and that the first routing device obtains a second packet based on the first packet includes:
The first routing device obtains an IPv4 address of the second host based on the IPv6 address of the second host and a second correspondence, where the second correspondence includes the IPv6 address of the second host and the IPv4 address of the second host.

The first routing device obtains the second packet based on the IPv4 address of the second host and the first packet, where a source address in the IPv4 header of the second packet is the IPv4 address of the second host.

Optionally, before the first routing device receives a first packet, the method further includes:

The first routing device receives the second correspondence advertised by a second routing device.

According to a third aspect, a packet forwarding apparatus is provided, where the packet forwarding apparatus is disposed on the first routing device according to any one of the first aspect or the optional implementations of the first aspect. The packet forwarding apparatus includes at least one unit, and the at least one unit is configured to implement the method according to any one of the first aspect or the optional implementations of the first aspect. In some embodiments, the unit in the packet forwarding apparatus according to the third aspect is implemented by software, and the unit in the packet forwarding apparatus is a program module. In some other embodiments, the unit in the packet forwarding apparatus according to the third aspect is implemented by hardware or firmware. For details of the packet forwarding apparatus according to the third aspect, refer to any one of the first aspect or the optional implementations of the first aspect. Details are not described herein again.

According to a fourth aspect, a packet forwarding apparatus is provided, where the packet forwarding apparatus is disposed on the first routing device according to any one of the second aspect or the optional implementations of the second aspect. The packet forwarding apparatus includes at least one unit, and the at least one unit is configured to implement the method according to any one of the second aspect or the optional implementations of the second aspect. In some embodiments, the unit in the packet forwarding apparatus according to the fourth aspect is implemented by software, and the unit in the packet forwarding apparatus is a program module. In some other embodiments, the unit in the packet forwarding apparatus according to the fourth aspect is implemented by hardware or firmware. For specific details of the packet forwarding apparatus according to the fourth aspect, refer to any one of the second aspect or the optional implementations of the second aspect. Details are not described herein again.

According to a fifth aspect, a routing device is provided, where the routing device includes a processor, the processor is coupled to a memory, the memory stores at least one computer program instruction, and the at least one computer program instruction is loaded and executed by the processor, to enable the routing device to implement the method according to any one of the first aspect or the optional implementations of the first aspect. For specific details of the routing device according to the fifth aspect, refer to any one of the first aspect or the optional implementations of the first aspect. Details are not described herein again.

According to a sixth aspect, a routing device is provided, where the routing device includes a processor, the processor is coupled to a memory, the memory stores at least one computer program instruction, and the at least one computer program instruction is loaded and executed by the processor, to enable the routing device to implement the method according to any one of the second aspect or the optional implementations of the second aspect. For specific details of the routing device according to the sixth aspect, refer to any one of the second aspect or the optional implementations of the second aspect. Details are not described herein again.

According to a seventh aspect, a routing device is provided, where the routing device includes a main control board and an interface board. The main control board includes a first processor and a first memory. The interface board includes a second processor, a second memory, and an interface card. The main control board is coupled to the interface board.

The second memory may be configured to store program code, and the second processor is configured to invoke the program code in the second memory to trigger the interface card to perform the following operations: Receive a first packet, where the first packet includes a first internet protocol version 6 IPv6 header, a first IPv6 extension header, an upper-layer header, and an upper-layer payload, and the first IPv6 extension header includes a bit index explicit replication BIER option; obtain a second packet based on the first packet, where the second packet includes the upper-layer header, the upper-layer payload, and a second IPv6 header obtained based on the first IPv6 header; and send the second packet to a first host serving as a BIER neighbor.

The first memory may be configured to store program code, and the first processor is configured to invoke the program code in the first memory to perform the following operation: advertising an identifier of the first host between routing devices in a BIER domain.

In a possible implementation, an inter-process communication protocol (inter-process communication, IPC) channel is established between the main control board and the interface board, and the main control board communicates with the interface board through the IPC channel.

According to an eighth aspect, a routing device is provided, where the routing device includes a main control board and an interface board, and may further include a switching board. The routing device is configured to perform the method according to any one of the first aspect or the possible implementations of the first aspect. Specifically, the routing device includes a unit configured to perform the method according to any one of the first aspect or the possible implementations of the first aspect.

A second memory may be configured to store program code, and a second processor is configured to invoke the program code in the second memory to trigger an interface card to perform the following operations: Receive a first packet, where the first packet includes an internet protocol version 6 IPv6 header, a first IPv6 extension header, an upper-layer header, and an upper-layer payload, and the first IPv6 extension header includes a bit index explicit replication BIER option; obtain a second packet based on the first packet, where the second packet includes the upper-layer header, the upper-layer payload, and an IPv4 header obtained based on the IPv6 header; and send the second packet to a first host serving as a BIER neighbor.

A first memory may be configured to store program code, and a first processor is configured to invoke the program code in the first memory to perform the following operation: advertising an identifier of the first host between routing devices in a BIER domain.

The first memory may be configured to store the program code, and the first processor is configured to invoke the program code in the first memory to perform the following operation: The first memory may be configured to store the program code, and the first processor is configured to invoke the program code in the first memory to perform the following operation: advertising, between the routing devices in the BIER domain, a correspondence between an IPv6 address of the first host and an IPv4 address of the first host.

In a possible implementation, an IPC channel is established between the main control board and the interface board, and the main control board communicates with the interface board through the IPC channel.

According to a ninth aspect, a computer-readable storage medium is provided, where the storage medium stores at least one instruction, and when the instruction is run on a computer, the computer is enabled to perform the method according to any one of the first aspect or the optional implementations of the first aspect.

According to a tenth aspect, a computer-readable storage medium is provided, where the storage medium stores at least one instruction, and when the instruction is run on a computer, the computer is enabled to perform the method according to any one of the second aspect or the optional implementations of the second aspect.

According to an eleventh aspect, a computer program product is provided, where the computer program product includes one or more computer program instructions, and when the computer program instructions are loaded and executed by a computer, the computer is enabled to perform the method according to any one of the first aspect or the optional implementations of the first aspect.

According to a twelfth aspect, a computer program product is provided, where the computer program product includes one or more computer program instructions, and when the computer program instructions are loaded and executed by a computer, the computer is enabled to perform the method according to any one of the second aspect or the optional implementations of the second aspect.

According to a thirteenth aspect, a chip is provided, including a memory and a processor. The memory is configured to store computer instructions, and the processor is configured to invoke the computer instructions from the memory and run the computer instructions, to perform the method according to any one of the first aspect and the possible implementations of the first aspect.

According to a fourteenth aspect, a chip is provided, including a memory and a processor. The memory is configured to store computer instructions, and the processor is configured to invoke the computer instructions from the memory and run the computer instructions, to perform the method according to any one of the second aspect or the optional implementations of the second aspect.

According to a fifteenth aspect, a network system is provided, where the network system includes a first host and the routing device according to any one of the third aspect to the sixth aspect.

### BRIEF DESCRIPTION OF DRAWINGS

FIG. 1 is a schematic diagram of an RTC scenario according to an embodiment of this application;
FIG. 2 is a schematic diagram of an architecture of a network system according to an embodiment of this application;
FIG. 3 is a schematic diagram of an architecture of a network system according to an embodiment of this application;
FIG. 4 is a flowchart of a packet forwarding method according to an embodiment of this application;
FIG. 5 is a schematic diagram of a format of a first packet according to an embodiment of this application;
FIG. 6 is a schematic diagram of comparison between a first packet and a second packet according to an embodiment of this application;
FIG. 7 is a schematic diagram of comparison between a first packet and a second packet according to an embodiment of this application;
FIG. 8 is a flowchart of a scenario of a packet forwarding method according to an embodiment of this application;
FIG. 9 is a flowchart of a scenario of a packet forwarding method according to an embodiment of this application;
FIG. 10 is a flowchart of a scenario of a packet forwarding method according to an embodiment of this application;
FIG. 11 is a flowchart of a scenario of a packet forwarding method according to an embodiment of this application;
FIG. 12 is a flowchart of a scenario of a packet forwarding method according to an embodiment of this application;
FIG. 13 is a schematic diagram of a structure of a packet forwarding apparatus 600 according to an embodiment of this application;
FIG. 14 is a schematic diagram of a structure of a routing device 700 according to an embodiment of this application; and
FIG. 15 is a schematic diagram of a structure of a routing device 800 according to an embodiment of this application.

### DESCRIPTION OF EMBODIMENTS

To make the objectives, technical solutions, and advantages of this application clearer, the following further describes the implementations of this application in detail with reference to the accompanying drawings.

The following explains and describes some terms and concepts in embodiments of this application.

### (1) Internet protocol (internet protocol, IP) node (IP node)

An IP node refers to a device that communicates according to an IP protocol (a device that implements IP). From a perspective of an IP protocol version, the IP node includes an internet protocol version 4 (internet protocol version 4, IPv4) node and an internet protocol version 4 (internet protocol version 4, IPv6) node. From a perspective of a device role, the IP node includes a routing device and a host.

### (2) Routing device (router)

A routing device is an IP node that forwards an IP packet to another IP node (a node that forwards IP packets not explicitly addressed to itself). The routing device includes but is not limited to a router, a layer-3 switch, a firewall, and the like. In some embodiments of this application, a specific routing device is simply represented in a form of "R+numeral". For example, R1, R2, and R3 represent three specific routing devices.

### (3) Host (host)

A host refers to any IP node that is not a routing device (any IP node that is not a router). The host includes but is not limited to a gateway, a server, user equipment, a load balance (load balance, LB) device, or the like. The user equipment includes but is not limited to a personal computer, a mobile phone, a laptop computer, telephony over IP, a camera, a tablet computer, a wearable device, and the like. In some embodiments of this application, a specific host is simply represented in a form of "H+numeral". For example, H1, H2, and H3 represent three specific hosts.

### (4) Bit index explicit replication (bit index explicit replication, BIER)

BIER is a new technology for forwarding a multicast data packet. A typical feature of the BIER technology is that a destination node set of the multicast data packet is encapsulated in a packet header in a form of a bitstring before being sent, so that a transit node in a network does not need to establish a multicast tree for each multicast flow or store a multicast flow state, thereby reducing occupation of resources. A basic process of forwarding based on the BIER technology is as follows: When the multicast data packet enters a BIER domain, a bit forwarding ingress router (bit forwarding ingress router, BFIR, an ingress node in the BIER domain) determines a bit forwarding egress router (bit forwarding egress router, BFER, an egress node in the BIER domain) set to which the packet needs to be sent. The BFIR encapsulates a BIER option (also referred to as a BIER header) into the packet. The BIER option includes the bitstring.

In some embodiments of this application, the BIER generally refers to a method for encapsulating and forwarding a packet based on a bitstring. To be specific, a transmit end encapsulates the bitstring into the packet, and after receiving the packet including the bitstring, a routing device duplicates the packet based on the bitstring and sends the packet to a destination node. In some embodiments of this application, a BIER packet reuses an original BIER packet format.

### (5) Bitstring (bitstring)

A bitstring represents a group of BFERs in a BIER domain, and each bit in the bitstring corresponds to one BFER. Bits set in the bitstring are a set of identifiers of destination BRER nodes of a packet. When a BFIR needs to forward a packet to a specified group of BFERs through a transit node, the BFIR sets all bits that correspond to the specified group of BFERs and that are in a BIER option, so that the transit node can duplicate the packet based on a setting situation in the bitstring and forward the packet. For example, the BIER domain includes four edge nodes, and identifiers of the four edge nodes are, for example, 1, 2, 3, and 4 respectively. When the BFIR needs to forward a packet to an edge node whose BFR ID is 1 and an edge node whose BFR ID is 2, the BFIR may include a bitstring 0011 in the BIER option.

### (6) BIER forwarding router (BIER forwarding router, BFR)

A BFR refers to a node that supports BIER forwarding. The BFR includes a BFIR, a BFER, and a transit BFR. The BFIR and the BFER are collectively referred to edge nodes in a BIER domain. The transit BFR is a transit forwarding node in the BIER domain.

### (7) BIER forwarding router identifier (BIER forwarding router Identifier, BFR-ID)

A BFR-ID is an identifier of a BFER node. The BFR-ID is represented by an integer ranging from 1 to 65,535. For example, a network has 256 edge nodes, and each edge node needs to be configured with a unique value ranging from 1 to 256. A destination node set is represented by a 256-bit (or 32-byte) bitstring, and a location or an index of each bit in the bitstring represents an edge node.

### (8) Identifier (identifier, ID) of a host

An identifier of a host is equivalent to a BFR-ID in a BIER architecture. The ID of the host corresponds to a bit in a bitstring in a packet, and the identifier of the host corresponds to a bit in a forwarding bit mask (forwarding bit mask, FBM) in a forwarding table. A difference lies in that a node of the BFR-ID is usually a routing device, but a node corresponding to the identifier of the host is a host instead of a routing device.

### (9) Bit index explicit replication over internet protocol version 6 (internet protocol version 6, IPv6) data plane (Bit Index Explicit Replication over IPv6 data plane, BIERv6)

A conventional BIER is implemented based on multi-protocol label switching (multi-protocol label switching, MPLS). A biggest difference between BIERv6 and the conventional BIER is that the BIERv6 is a multicast solution based on native IPv6 (native IPv6) rather than an MPLS label. The BIERv6 inherits a core design concept of a BIER. The BIERv6 duplicates a multicast packet to a specified receiver by using a bitstring, and a transit node does not need to establish a multicast distribution tree, thereby implementing stateless forwarding. Based on this, a BIERv6 technology includes, in an IPv6 extension header, information required for BIER forwarding, thereby eliminating an MPLS label forwarding mechanism. A mechanism of using the IPv6 extension header also facilitates subsequent feature evolution and addition of new features, such as IPv6 packet fragmentation and reassembly, multicast network slicing, and in-band flow measurement. Because a service is only deployed at an ingress node and an egress node, when a multicast service changes, the transit node is unaware of the change. Therefore, when a network topology changes, there is no need to withdraw or re-establish a large quantity of multicast trees. This greatly simplifies operation and maintenance.

### (10) IPv6 packet

According to RFC 8200, an IPv6 packet mainly includes an IPv6 header, an IPv6 extension header, and an upper-layer protocol data unit.

The IPv6 header is also referred to as an IPv6 basic packet header. The IPv6 header includes eight fields with a fixed length of 40 bytes. Each IPv6 packet needs to include an IPv6 header. The IPv6 header provides basic information about packet forwarding and the basic information is parsed by all IPv6 devices on a forwarding path.

The upper-layer protocol data unit mainly includes an upper-layer header (upper-layer header, ULH) and an upper-layer payload. The upper-layer protocol data unit is, for example, an internet control message protocol for IPv6 (internet control message protocol for IPv6, ICMPv6) packet, a transmission control protocol (transmission control protocol, TCP) packet, or a user datagram protocol (user datagram protocol, UDP) packet.

The IPv6 extension header is placed between the IPv6 basic packet header and the upper-layer protocol data unit. An IPv6 packet may include zero, one, or more extension headers. When a plurality of IPv6 extension headers are used, a next header (next header) field of a previous IPv6 extension header specifies a type of a next IPv6 extension header. In this way, a chained packet header list is formed. Specifically, a next header field in the IPv6 header specifies a type of the 1^{st} IPv6 extension header, and a next header field in the 1^{st} IPv6 extension header specifies the type of the next IPv6 extension header (or specifies a type of an upper-layer protocol if the next IPv6 extension header does not exist). A routing device determines, based on a protocol number specified by a next header value in the basic packet header, whether to process the IPv6 extension header.

A concept of the IPv6 extension header is introduced to obviate a need to modify the existing packet structure when an option is added. Theoretically, IPv6 can be extended unrestrictedly. In addition, IPv6 has excellent flexibility on the premise that the packet header is simplified.

### (11) BIERv6 packet

BIERv6 uses an IPv6 extension header to implement a function of the BIERv6. A destination address in an IPv6 packet identifies an IPv6 address of a BIER forwarding node, that is, an End.BIER address, indicating that BIERv6 forwarding needs to be performed in the node. A source address in the IPv6 packet identifies a source of the BIERv6 packet. The BIERv6 includes a BIER option in an IPv6 extension header (such as a destination options header), and forms a BIERv6 packet header together with an IPv6 header. A BFR reads a bitstring in the BIER option, duplicates and forwards the packet based on a bit index forwarding table (bit index forwarding table, BIFT), and updates the bitstring.

### (12) End.BIER

To support packet forwarding based on an IPv6 extension header, a BIERv6 network defines a new type of segment identifier (segment ID, SID), called End.BIER. The segment identifier is used as an IPv6 destination address to indicate a forwarding plane of a device to process a BIERv6 extension header in a packet. When receiving and processing a BIERv6 packet, each node encapsulates an End.BIER SID of a next-hop node into an outer IPv6 destination address of the BIERv6 packet (where a destination node of a multicast packet is defined by a bitstring), so that the next-hop node forwards the packet according to a BIERv6 process. The End.BIER SID can also make full use of reachability of an IPv6 unicast route and skip an IPv6 node that does not support BIERv6.

The End.BIER SID includes two parts: a locator and other bits. The locator represents a BIERv6 forwarding node. A definition of the locator is the same as that of a segment routing over internet protocol version 6 (segment routing over internet protocol version 6, SRv6). The locator has a function of location. After the locator is configured on a node, a system generates a locator network segment route and diffuses the route in an SRv6 domain according to an interior gateway protocol (interior gateway protocol, IGP). Another node in the network may locate the node by using the locator network segment route, and all SRv6 SIDs advertised by the node are reachable by using the locator network segment route. The End.BIER SID can direct the packet to a specified BFR. After receiving a multicast packet, the BFR identifies that a destination address of the packet is the local End.BIER SID and determines that the packet is forwarded according to the BIERv6 process.

### (13) BIFT

A bit index forwarding table (BIFT) is an entry used by each BFR in a BIERv6 domain to forward a multicast packet. The bit index forwarding table indicates BFER nodes that can be reached through a BFR neighbor, including the BFR neighbor (BFR neighbor, Nbr) and an FBM. Each BFR in BIERv6 advertises information such as a local BFR-prefix (BFR-prefix), a sub-domain ID (sub-domain ID), a BFR-ID, a bitstring length (bitstring length, BSL), and a path calculation algorithm to another BFR node according to an IGP. Each BFR node obtains the BFR neighbor from the node to each BFER through path calculation.

### (14) FBM

An FBM is represented by a bitstring, and a length of the bitstring is the same as that of a bitstring used for packet forwarding. For example, if the length of the bitstring used for packet forwarding is 256 bits, the FBM in a BIERv6 forwarding table is also 256 bits. In a process of packet forwarding, an AND (AND) operation is performed on the bitstring in the packet and the FBM in the forwarding table.

The following describes an application scenario in embodiments of this application by using an example.

This embodiment of this application is applied to a scenario in which a BIER domain includes not only a routing device but also a host. In other words, an edge node in the BIER domain may be a host. In this scenario, after a source end (for example, a host) encapsulates an IPv6 extension header including a BIER option into a packet and sends the packet to a routing device, the routing device duplicates the packet based on a bitstring in the BIER option and forwards the packet to a host serving as a destination end.

It is found in a research process that, in this scenario, it is often difficult for the host serving as the destination end to process the IPv6 extension header including the BIER option.

Specifically, different from a case in which the routing device processes a BIER IPv6 packet after receiving the BIER IPv6 packet, a problem that may exist when the host receives the BIER IPv6 packet is that when the host receives the packet including the IPv6 extension header, the host may discard the packet. For example, a kernel of an operating system (operating system, OS) of the host discards a received packet that includes the IPv6 extension header. As a result, an application program in the host cannot receive the packet, and a socket (socket) application programming interface (application programming interface, API) of the application program cannot obtain the packet by using a packet receiving function. In this case, to enable the application program in the host to receive the packet, in an implementation, the operating system of the host is changed, for example, a patch is installed on the operating system. This implementation requires high overheads in terms of software and deployment. In another implementation, if a smart network interface card (smart network interface card, smart NIC) is installed on the host, before the packet is sent to the kernel of the operating system, the smart network interface card first deletes the IPv6 extension header in the packet. In this way, the packet received by the kernel of the operating system no longer carries the IPv6 extension header, and therefore the kernel can send the packet to the application program that invokes the socket API. However, this implementation also has high overheads and depends on the smart network interface card.

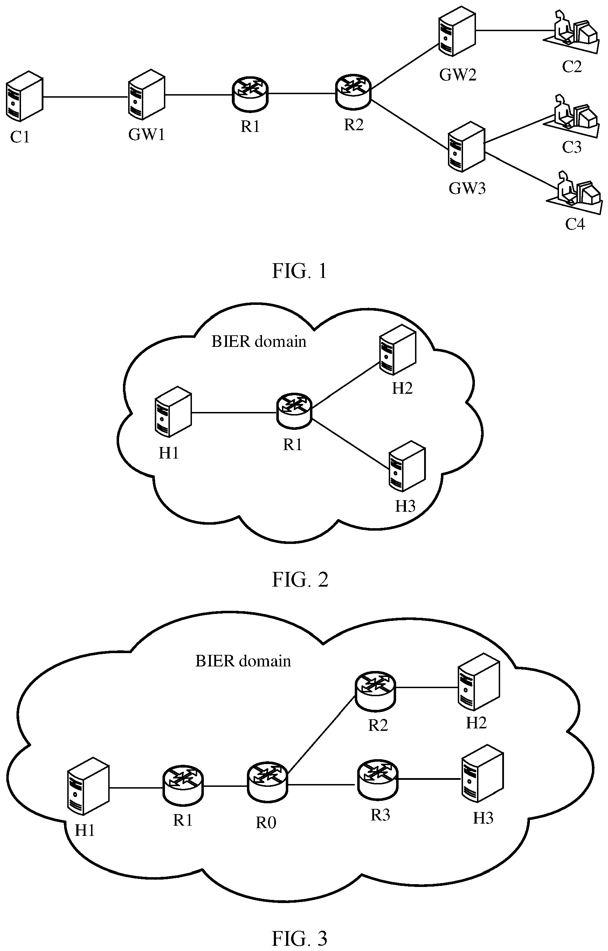

Another problem that may exist when the host receives the BIER IPv6 packet is that the host may support IPv4 but not IPv6, or a network between the host and the routing device supports IPv4 but not IPv6. For example, in FIG. 1, a gateway GW2 or a gateway GW3 supports IPv4 but does not support IPv6, but it is still hoped that the gateway GW2 or the gateway GW3, a gateway GW1, and a routing device RT or a routing device RT2 work together to deploy web real-time communication (web real-time communication, web RTC). How to deal with such a case that the host or the network between the host and the routing device does not support IPv6 is also a problem that needs to be resolved in embodiments of this application.

In view of this, some embodiments of this application provide a packet forwarding method. When a routing device senses that a destination node to which a packet needs to be duplicated and sent is a host, the routing device pops up an IPv6 extension header including a BIER option, to avoid a case in which the packet received by the host includes the IPv6 extension header including the BIER option, thereby resolving a problem that it is difficult for the host serving as a destination end to process the IPv6 extension header including the BIER option, helping the host receive the packet successfully, and avoiding extra overheads or dependency caused by the IPv6 extension header when the host receives the packet. This simplifies system deployment.

The following uses a specific typical application scenario as an example for description.

In a real-time communication (real-time communication, RTC) scenario, a plurality of RTC clients (RTC clients) send audio or video data packets to a plurality of RTC clients through an RTC gateway (RTC gateway). Optionally, a plurality of RTC gateways are deployed in distributed mode.

FIG. 1 is a schematic networking diagram of an RTC scenario. After receiving the packets sent by a client C1, a gateway GW1 obtains packet content and sends the packet content to a gateway GW2 and a gateway GW3 through IPv6 BIER encapsulation. The gateway GW2 and the gateway GW3 then send these audio or video data packets to corresponding clients.

C represents an RTC client. For example, in web RTC, a client (C) is a browser compatible with a web RTC standard. GW represents an RTC gateway. For example, in the web RTC, a gateway (gateway, GW) is a web RTC gateway. R represents a routing device (router). For example, the routing device is a router that supports BIER IPv6 forwarding.

A specific forwarding process in a scenario shown in FIG. 1 is as follows: First, the client C1 sends a packet to the gateway GW1. A source address in the packet is an address of the client C1, a destination address in the packet is an address of the gateway GW1, and the packet is an IPv4 packet. A packet format may be simplified as: an IPv4 header + a UDP header + an audio and video payload. After receiving the packet sent by the client C1, the gateway GW1 obtains the audio and video payload in the packet, re-encapsulates the audio and video payload into a BIER IPv6 packet, and sends the BIER IPv6 packet to a routing device R1. A format of the BIER IPv6 packet encapsulated by the gateway GW1 may be simplified as: an IPv6 header + an IPv6 extension header + a UDP header + an audio and video payload. After receiving the BIER IPv6 packet sent by the gateway GW1, the routing device R1 sends the packet to a routing device R2 based on a bitstring in the IPv6 extension header. The routing device R2 duplicates the packet based on the bitstring in the IPv6 extension header and sends the packet to the gateway GW2 and the gateway GW3. After receiving the packet, the gateway GW2 reads the audio and video payload in the packet, re-encapsulates the audio and video payload into a packet in a format of an IPv4 header + a UDP header + an audio and video payload, and sends the packet in the format of an IPv4 header + a UDP header + an audio and video payload to a client C2. Similar to an action of the gateway GW2, after reading the audio and video payload in the packet, the gateway GW3 re-encapsulates the audio and video payload into a packet in a format of an IPv4 header + a UDP header + an audio and video payload, and sends the packet in the format of an IPv4 header + a UDP header + an audio and video payload to a client C3. The gateway GW3 re-encapsulates the audio and video payload into a packet in a format of an IPv4 header + a TCP header + an audio and video payload, and sends the packet in the format of an IPv4 header + a TCP header + an audio and video payload to a client C4.

In the scenario shown in FIG. 1, with reference to descriptions in term and concept explanation parts (2) and (3) in this specification, the three devices, namely, the gateway GW1, the gateway GW2, and the gateway GW3, are all hosts rather than routers. For example, for the gateway GW1, after the gateway GW1 receives the IPv4 packet, an action of the gateway GW1 is not to directly forward the IPv4 packet to the routing device R1, but to reassemble the audio and video payload into the IPv6 packet after obtaining the packet content (that is, the audio and video payload). The IPv6 packet is generated on the gateway GW1. It can be seen from the action of the gateway GW1 that the gateway GW1 is a host. A process of obtaining the packet content, reassembling the packet content into the IPv6 packet, and sending the IPv6 packet by the gateway GW1 is usually completed in an application program. For example, the application program uses a socket API to implement the following process: The application program invokes a bind (bind) function (used to connect a socket to a specified port) or a listen (listen) function of the socket to listen to a TCP port or a UDP port, to receive the IPv4 packet and obtain a payload of the IPv4 packet, and then invokes a send (send) function or a send to function to encapsulate the payload into the IPv6 packet and send the IPv6 packet. Even if a packet received by the gateway GW1 is the IPv6 packet, the gateway GW1 is still a host, because the gateway GW1 does not perform forwarding (forwarding) on the received IPv6 packet, but re-encapsulates the payload after obtaining the payload. Similarly, the gateway GW2 and the gateway GW3 are also hosts.

In the scenario shown in FIG. 1, both the routing device R1 and the routing device R2 are routing devices. Both the routing device R1 and the routing device R2 forward the received IPv6 BIER packet. In a forwarding process, a source address in the IPv6 header remains unchanged, and a hop limit (hop limit) field keeps continuous.

In the scenario shown in FIG. 1, after the gateway GW1 (host) encapsulates a received packet into the BIER IPv6 packet and sends the packet to the IPv6 routing device R1 and the IPv6 routing device R2, how to enable application programs of the gateway GW2 (host) and the gateway GW3 (host) to receive the packet successfully, for example, receive the packet by using a socket API function is a problem that needs to be resolved.

To resolve this problem, the IPv6 routing device R2 may perform the method provided in this embodiment of this application. For example, when the IPv6 routing device R2 receives a packet with the IPv6 extension header including the BIER option, the IPv6 routing device R2 determines to duplicate the packet based on the bitstring in the BIER option and forward the packet to the gateway GW2 and the gateway GW3, and before sending the packet to the gateway GW2 and the gateway GW3, the IPv6 routing device R2 pops up the IPv6 extension header including the BIER option. This avoids a case in which the packet received by the gateway GW2 and the gateway GW3 carries the IPv6 extension header including the BIER option.

The following describes an architecture of a system in embodiments of this application by using an example.

FIG. 2 shows an architectural diagram of a network system according to an embodiment of this application. The network system shown in FIG. 2 includes a host H1, a host H2, a host H3, and a routing device R1. The host H1, the host H2, the host H3, and the routing device R1 form a packet duplication and receiving domain. Specifically, in a packet forwarding process, a host that is among the host H1, the host H2, and the host H3 and that serves as a transmit end encapsulates a bitstring in a packet. A bit set in the bitstring identifies a host that is among the host H1, the host H2, and the host H3 and that serves as a receive end. The routing device R1 duplicates the packet based on the bitstring, and forwards the packet to the host that is among the host H1, the host H2, and the host H3 and that serves as the receive end.

In this embodiment, the method for encapsulating and forwarding a packet by using a bitstring may be referred to as BIER, and the packet duplication and receiving domain may be referred to as a BIER domain (BIER domain). Devices in the BIER domain include a routing device and a host. The host H1, the host H2, and the host H3 are all edge nodes in the BIER domain, and the packet including the bitstring optionally uses an existing BIER packet format.

FIG. 3 shows another architectural diagram of a network system according to an embodiment of this application. The network system shown in FIG. 3 includes a host H1, a host H2, a host H3, a routing device R0, a routing device R1, a routing device R2, and a routing device R3. The host H1, the host H2, the host H3, the routing device R0, the routing device R1, the routing device R2, and the routing device R3 form a packet duplication and receiving domain (BIER domain).

The following describes a method process in embodiments of this application by using an example.

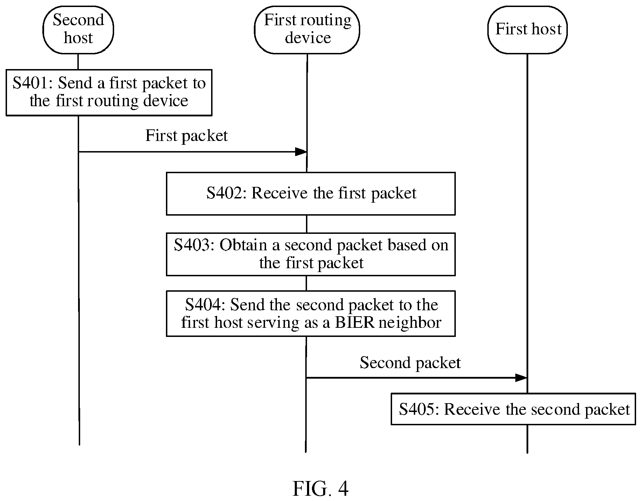

FIG. 4 is a flowchart of a packet forwarding method according to an embodiment of this application. The method shown in FIG. 4 includes the following S401 to S405.

The method shown in FIG. 4 relates to interaction between a plurality of hosts. To distinguish between different hosts, a "first host" and a "second host" are defined to distinguish between and describe the plurality of different hosts. The method shown in FIG. 4 is described by using a process in which the second host sends a packet to the first host as an example. In a packet forwarding process, the second host acts as a packet sender, and the first host acts as a packet receiver. Optionally, both the second host and the first host are edge nodes in a BIER domain.

Some optional implementations of the method shown in FIG. 4 relate to interaction between a plurality of routing devices. To distinguish between different routing devices, a "first routing device" and a "second routing device" are defined to distinguish between and describe the plurality of different routing devices.

Atypical application scenario of the method shown in FIG. 4 includes an RTC scenario. For example, with reference to the RTC scenario shown in FIG. 1, the second host in the method shown in FIG. 4 is the RTC gateway GW1 in FIG. 1, the first routing device in the method shown in FIG. 4 is the routing device R2 in FIG. 1, and the first host in the method shown in FIG. 4 is the RTC gateway GW2 or the RTC gateway GW3 in FIG. 1.

A network deployment scenario on which the method shown in FIG. 4 is based is optionally shown in FIG. 2. For example, with reference to FIG. 2, the second host in the method shown in FIG. 4 is the host H1 in FIG. 2, the first routing device in the method shown in FIG. 4 is the routing device R1 in FIG. 2, and the first host in the method shown in FIG. 4 is the host H2 or the host H3 in FIG. 2.

A network deployment scenario on which the method shown in FIG. 4 is based is optionally shown in FIG. 3. For example, with reference to FIG. 3, the second host in the method shown in FIG. 4 is the host H1 in FIG. 3, the first routing device in the method shown in FIG. 4 is the routing device R2 in FIG. 3, and the first host in the method shown in FIG. 4 is the host H2 in FIG. 3. Alternatively, the first routing device in the method shown in FIG. 4 is the routing device R3 in FIG. 3, and the first host in the method shown in FIG. 4 is the host H3 in FIG. 3.

The first routing device has a neighbor relationship with the first host. In other words, the first host is a neighbor of the first routing device in the BIER domain. Specifically, the first host is a downstream neighbor of the first routing device. Optionally, the first host is a next-hop BIER node of the first routing device.

A manner of connection between the first routing device and the first host includes a plurality of implementations. In a possible implementation, the first routing device is connected to the first host in a direct IP connection manner. For example, the first routing device is physically and directly connected to the first host, or the first routing device is connected to the first host through one or more layer-2 network devices. In a case of the direct IP connection, a hop limit of an IPv6 basic header in a packet (a second packet) sent by the first routing device is the same as a hop limit of an IPv6 basic header in a packet received by the first host. In another possible implementation, the first routing device is connected to the first host in an indirect IP connection manner. For example, the first routing device is connected to the first host via one or more native (native) IPv6 network devices. In a case of the indirect IP connection, a hop limit of an IPv6 basic header in a packet (a second packet) sent by the first routing device is greater than a hop limit of an IPv6 basic header in a packet received by the first host.

Optionally, the first routing device acts as a proxy node of the first host, and performs BIER forwarding behavior, such as processing an IPv6 extension header including a BIER option and advertising a BFR-ID (that is, an identifier of a host), on behalf of the first host, to reduce overheads of the first host.

The method shown in FIG. 4 relates to a process of processing a packet inside a routing device. To distinguish between different packets, a "first packet" is defined to represent a packet received by the routing device, and a "second packet" is defined to represent a packet sent by the routing device.

The method shown in FIG. 4 optionally relates to a process in which the routing device duplicates a packet and forwards the packet to a plurality of hosts. For ease of understanding, in the method shown in FIG. 4, how the routing device duplicates a packet and forwards the packet to the first host is used as an example for description. For a manner in which the routing device duplicates a packet and forwards the packet to another host other than the first host, refer to a process of forwarding a packet to the first host.

The method shown in FIG. 4 is optionally used in a scenario in which the routing device processes a plurality of packets in one multicast flow. For ease of understanding, the method shown in FIG. 4 is described by using a process of processing the first packet as an example. For a manner of processing another packet in the multicast flow, refer to a manner of processing the first packet.

The packet to which the method shown in FIG. 4 relates optionally includes a plurality of IPv6 extension headers. To distinguish between different IPv6 extension headers, a "first IPv6 extension header" and a "second IPv6 extension header" are defined to distinguish and describe the plurality of different IPv6 extension headers.

S401: The second host sends the first packet to the first routing device.

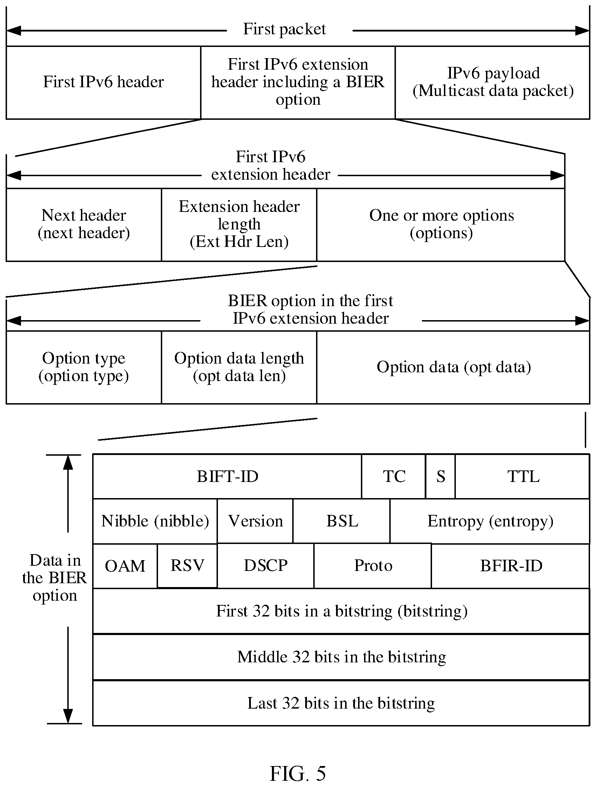

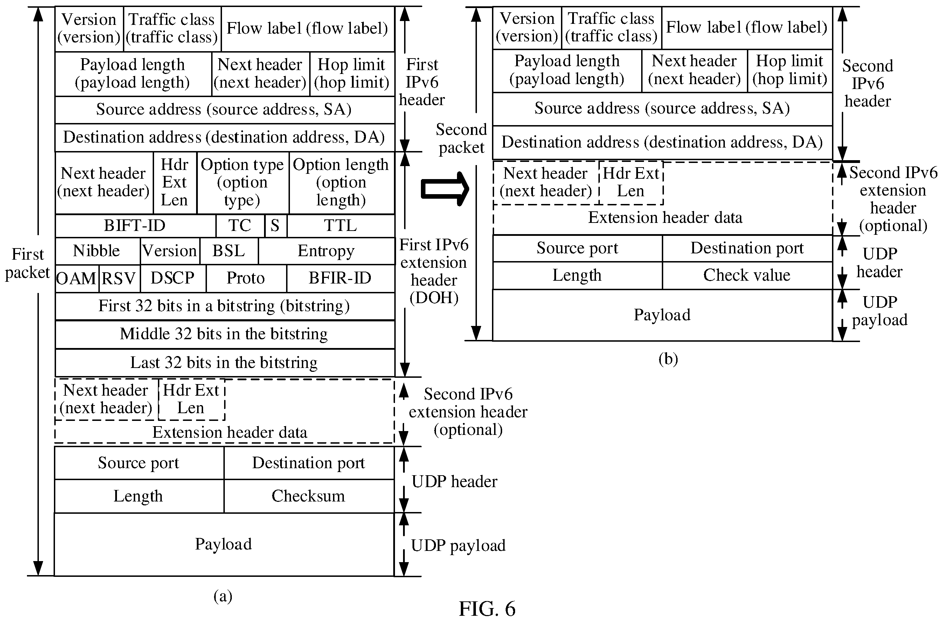

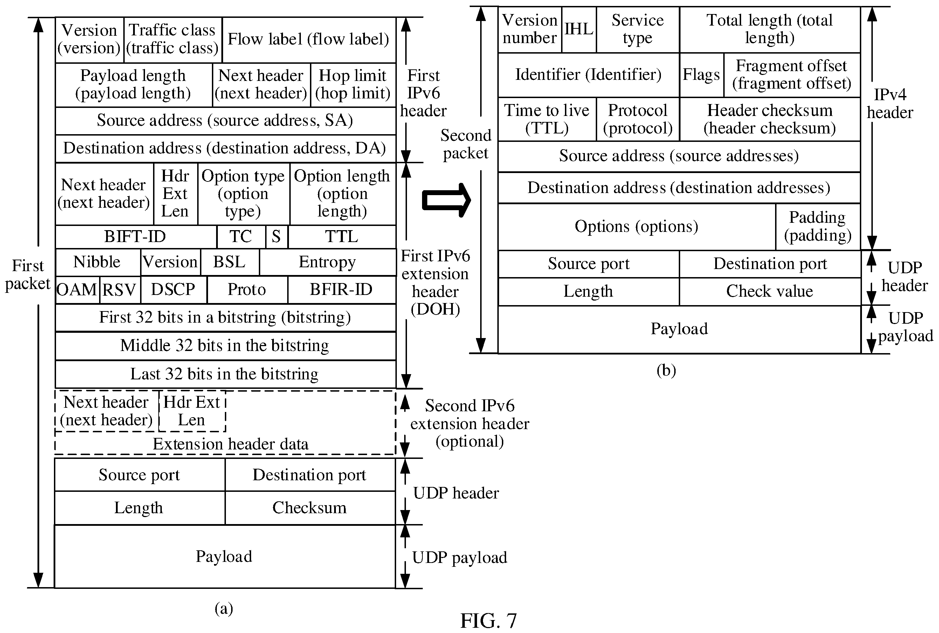

For an overall format of the first packet, refer to FIG. 5 or (a) in FIG. 6 or (a) in FIG. 7. The first packet includes a first IPv6 header, the first IPv6 extension header, an upper-layer header, and an upper-layer payload. In the first packet, the first IPv6 header is encapsulated in an outer layer of the first IPv6 extension header, the first IPv6 extension header is encapsulated between the first IPv6 header and the upper-layer header, and the upper-layer payload is encapsulated in an inner layer of the upper-layer header. The following describes each part of the first packet.

The first IPv6 header is an IPv6 basic packet header in the first packet. For a specific format of the first IPv6 header, refer to (a) in FIG. 6 or (a) in FIG. 7. The first IPv6 header mainly includes a source address field, a destination address field, a hop limit field, a next header field, a payload length (payload length) field, and the like.

The source address field in the first IPv6 header includes an IPv6 address of the first host.

The destination address field in the first IPv6 header includes an IPv6 address of the first routing device. Specifically, the destination address field in the first IPv6 header includes an End.BIER address of the first routing device, where the End.BIER address indicates the first routing device to duplicate the packet based on a bitstring in the first packet and forward the packet to a destination node (the second host) corresponding to a bit set in the bitstring.

A value of the next header field in the first IPv6 header is a protocol number of the 1^{st} IPv6 extension header after the first IPv6 header. When the 1^{st} IPv6 extension header after the first IPv6 header is the first IPv6 extension header including the BIER option, the value of the next header field in the first IPv6 header is a protocol number of the first IPv6 extension header. For example, when the first IPv6 extension header is a destination options header, the value of the next header field in the first IPv6 header is 60 (where 60 is a protocol number of the destination options header). When the 1^{st} IPv6 extension header after the first IPv6 header is the second IPv6 extension header, the value of the next header field in the first IPv6 header is a protocol number of the second IPv6 extension header.

A value of the payload length field in the first IPv6 header is a sum of lengths of parts after the first IPv6 header in the first packet. When the first packet includes the first IPv6 header, the first IPv6 extension header, the upper-layer header, and the upper-layer payload, the value of the payload length field in the first IPv6 header is a sum of lengths of the following three parts: the first IPv6 extension header, the upper-layer header, and the upper-layer payload. For example, if the first IPv6 extension header is a destination options header whose length is 48 bytes, the upper-layer header is a UDP header whose length is 8 bytes, and the upper-layer payload is a UDP payload whose length is 492 bytes, the value of the payload length field in the first IPv6 header is 48 + 8 + 492 = 548. When the first packet includes the first IPv6 header, the first IPv6 extension header, the second IPv6 extension header, the upper-layer header, and the upper-layer payload, the value of the payload length field in the first IPv6 header is a sum of lengths of the following four parts: the first IPv6 extension header, the second IPv6 extension header, the upper-layer header, and the upper-layer payload. For example, if the first IPv6 extension header is a destination options header whose length is 48 bytes, the second IPv6 extension header is a fragment header whose length is 8 bytes, the upper-layer header is a UDP header whose length is 8 bytes, and the upper-layer payload is a UDP payload whose length is 492 bytes, the value of the payload length field in the first IPv6 header is 48 + 8 + 8 + 492 = 556.

The first IPv6 extension header is the IPv6 extension header including the BIER option. For a format of the first IPv6 extension header, refer to FIG. 5 or (a) in FIG. 6 or (a) in FIG. 7. A combination of the first IPv6 extension header and the first IPv6 header is also referred to as a BIERv6 packet header. There are a plurality of types of first IPv6 extension headers. Optionally, the first IPv6 extension header is a destination options header. Alternatively, the first IPv6 extension header is a hop-by-hop options header or a routing header. Optionally, the first IPv6 extension header includes the next header field, a header extension length (header extension length, Hdr Ext Len) field, and an option field. The BIER option is carried in the option field in the first IPv6 extension header. Optionally, the option field in the first IPv6 extension header includes only one option, that is, the BIER option. Alternatively, the option field in the first IPv6 extension header not only includes the BIER option, but also includes another option.

The BIER option includes the bitstring. Optionally, the BIER option further includes a length of the bitstring, an identifier of a BIFT, and the like.

For a format of the BIER option, refer to FIG. 5 or (a) in FIG. 6 or (a) in FIG. 7. Optionally, the BIER option has a format of a type length value (type length value, TLV), and therefore the BIER option is also referred to as a BIER TIV For example, the BIER option includes an option type (option type) field, an option data length (opt data len) field, and an option data (opt data) field. The option data field in the BIER option includes the bitstring.

Optionally, the BIER option has a format of a BIER header defined in RFC 8296. For example, a format of the BIER option is shown in FIG. 5. The BIER option includes a bitstring field, a BFIR-ID field, a proto field, a time to live (time to live, TTL) field, a version (ver) field, a BSL field, and the like. Optionally, the bitstring is carried in the bitstring field in the BIER option. Alternatively, the bitstring is carried in a bit index forwarding table identifier (BIFT-ID) field, the TTL field, an entropy (entropy) field, or an operation, administration, and maintenance (operation, administration, and maintenance, OAM) field in the BIER option.

The bitstring indicates a destination node of the first packet. Specifically, the bitstring includes a plurality of bits. Each bit in the bitstring corresponds to a host in the BIER domain, and a host corresponding to a bit set in the bitstring is a destination host of the first packet. In this embodiment, the destination host of the first packet includes the first host. Therefore, a bit that corresponds to the first host and that is in the bitstring is set. A position or an index of the bit that corresponds to the first host and that is in the bitstring is an identifier of the first host. For example, the k^{th} bit (the k^{th} bit in the bitstring in an order from a least significant bit to a most significant bit) is allocated to the first host, where the identifier of the first host is k, the k^{th} bit in the bitstring of the first packet is set, and k is a positive integer.

In some embodiments, the first packet not only includes the first IPv6 extension header, but also includes at least one second IPv6 extension header.

The second IPv6 extension header is an IPv6 extension header that does not include the BIER option. When the first packet includes a plurality of second IPv6 extension headers, each of the plurality of second IPv6 extension headers does not include the BIER option. As shown in (a) in FIG. 6 or (a) in FIG. 7, the at least one second IPv6 extension header in the first packet is encapsulated between the first IPv6 header and the upper-layer header.

A positional relationship between the second IPv6 extension header and the first IPv6 extension header includes a plurality of cases. Optionally, the at least one second IPv6 extension header is encapsulated in the outer layer of the first IPv6 extension header, or the at least one second IPv6 extension header is encapsulated in an inner layer of the first IPv6 extension header, or a part of the at least one second IPv6 extension header in the at least one second IPv6 extension header is encapsulated in the outer layer of the first IPv6 extension header, and another part of the at least one second IPv6 extension header is encapsulated in the inner layer of the first IPv6 extension header.

There are a plurality of types of second IPv6 extension headers. For example, the second IPv6 extension header includes but is not limited to the fragment header (fragment header, with a protocol number of 44), an encapsulating security payload (encapsulating security payload, ESP, with a protocol number of 50), an authentication header (with a protocol number of 51), a routing header (with a protocol number of 43), a hop-by-hop options header, a destination options header, and the like.

The second IPv6 extension header is an optional part in the first packet. In some embodiments, the first packet includes an IPv6 extension header, that is, the first IPv6 extension header.

The upper-layer header (upper-layer header) is an upper-layer protocol packet header. The upper-layer header is a header that is specified by an IP protocol number (IP protocol number) and that is other than the IPv6 extension header.

An IP protocol number corresponding to the IPv6 extension header includes 0, 43, 44, 60, and the like. 0 is the IP protocol number corresponding to the IPv6 extension header that is the hop-by-hop options header (hop by hop header). 43 is the IP protocol number corresponding to the IPv6 extension header that is the routing header (routing header). 44 is the IP protocol number corresponding to the IPv6 extension header that is the fragment header (fragment header). 60 is the IP protocol number corresponding to the IPv6 extension header that is the destination options header (destination options header). The protocol number corresponding to the IPv6 extension header is also referred to as a protocol number of the extension header in this specification.

An IP protocol number corresponding to the upper-layer header includes 1, 2, 6, 17, 4, 41, 137, and the like. 1 is the IP protocol number corresponding to the upper-layer header that is an ICMP header. 2 is the IP protocol number corresponding to the upper-layer header that is an IGMP. 6 is the IP protocol number corresponding to the upper-layer header that is a TCP header. 17 is the IP protocol number corresponding to the upper-layer header that is the UDP header. 4 is the IP protocol number corresponding to the upper-layer header that is an IPv4 header. 41 is the IP protocol number corresponding to the upper-layer header that is an IPv6 header. 137 is the IP protocol number corresponding to the upper-layer header that is an Ethernet (Ethernet) header. The IP protocol number corresponding to the upper-layer header is also referred to as a protocol number of the upper-layer header in this specification.

The upper-layer payload is an upper-layer protocol payload. A combination of the upper-layer header and the upper-layer payload is also referred to as an upper-layer protocol data unit. In some embodiments, the upper-layer header in the first packet is the UDP header, and the upper-layer payload in the first packet is a UDP payload. Content of the UDP payload in the first packet is optionally multimedia data, for example, audio data or video data. Optionally, the UDP payload in the first packet does not include an IP header. In some other embodiments, the upper-layer header in the first packet is the TCP header, and the upper-layer payload in the first packet is a TCP payload. In some other embodiments, the upper-layer header in the first packet is the ICMP header, and the upper-layer payload in the first packet is an ICMP payload. In some other embodiments, the upper-layer header in the first packet is the IPv4 header, and the upper-layer payload in the first packet is an IPv4 payload. In some other embodiments, the upper-layer header in the first packet is the IPv6 header, and the upper-layer payload in the first packet is an IPv6 payload. In some other embodiments, the upper-layer header in the first packet is the Ethernet header, and the upper-layer payload in the first packet is an Ethernet payload.

S402: The first routing device receives the first packet from the second host.

S403. The first routing device obtains the second packet based on the first packet.

The first routing device processes the first packet to obtain the second packet. A process in which the first routing device processes the first packet includes: The first routing device pops up the first IPv6 extension header that includes the BIER option and that is in the first packet, to obtain the second packet that does not include the first IPv6 extension header. An action of popping up the first IPv6 extension header including the BIER option is also referred to as a PHP operation.

In a possible implementation, the process in which the first routing device processes the first packet specifically includes: The first routing device processes the first IPv6 header in the first packet. If the first routing device finds that a destination address in the first IPv6 header is the End.BIER address of the first routing device, the first routing device reads the first IPv6 extension header in the first packet, and obtains the bitstring from the BIER option in the first IPv6 extension header. The first routing device obtains the identifier of the first host based on the bit set in the bitstring. The first routing device queries for routing information based on the identifier of the first host, and learns that a next-hop node corresponding to the identifier of the first host is the first host serving as a neighbor of the first routing device. Then, the first routing device pops up the first IPv6 extension header that includes the BIER option and that is in the first packet, to obtain the second packet that does not include the first IPv6 extension header.

The following describes a format of the second packet and a specific process in which the first routing device processes a packet with reference to two scenarios. Refer to the following Scenario 1 and Scenario 2.

Scenario 1: The first host supports IPv6.

In Scenario 1, the second packet sent by the first routing device to the first host is an IPv6 packet.

FIG. 6 is a schematic diagram of comparison between the first packet and the second packet in Scenario 1. (a) in FIG. 6 is a schematic diagram of a format of the first packet in Scenario 1, and (b) in FIG. 6 is a schematic diagram of a format of the second packet in Scenario 1. As shown in (b) in FIG. 6, the second packet includes a second IPv6 header, an upper-layer header, and an upper-layer payload.

The second IPv6 header is an IPv6 basic packet header in the second packet. The second IPv6 header is obtained based on the first IPv6 header. For example, the first routing device updates content of some fields in the first IPv6 header to obtain the second IPv6 header. The following describes a relationship between the second IPv6 header and the first IPv6 header.

Content of a source address field in the second IPv6 header is the same as content of the source address field in the first IPv6 header. The source address field in the second IPv6 header includes the IPv6 address of the first host. For example, in a process of processing the first packet, the first routing device keeps the content of the source address field in the IPv6 header unchanged.

A destination address field in the second IPv6 header includes the IPv6 address of the first host. For example, in the process of processing the first packet, the first routing device uses the IPv6 address of the first host to update the destination address field in the IPv6 header in the first packet, so that the destination address field in the IPv6 header changes from the End.BIER address of the first routing device to the IPv6 address of the first host. In a possible implementation, before receiving the first packet, the first routing device pre-stores the IPv6 address of the first host. For example, the first routing device stores a correspondence between the identifier of the first host and the IPv6 address of the first host. After receiving the first packet, the first routing device obtains the identifier of the first host based on the bitstring in the first packet. The first routing device queries for the correspondence between the identifier of the first host and the IPv6 address of the first host based on the identifier of the first host, to obtain the IPv6 address of the first host.

A value of a next header field in the second IPv6 header is a protocol number of the 1^{st} IPv6 extension header after the second IPv6 header. When the 1^{st} IPv6 extension header after the first IPv6 header is an IPv6 extension header (that is, the first IPv6 extension header) including the BIER option, the value of the next header field in the second IPv6 header is different from the value of the next header field in the first IPv6 header. For example, because the first IPv6 extension header is popped up, the 1^{st} IPv6 extension header after the IPv6 header is changed from the first IPv6 extension header to a next extension header of the first IPv6 extension header. In this case, the first routing device updates the next header field in the first IPv6 header by using a value (that is, a protocol number of the next extension header of the first IPv6 extension header) of a next header field in the first IPv6 extension header. For example, when the first packet consists of the first IPv6 header, the first IPv6 extension header, the upper-layer header, and the upper-layer payload in sequence, the value of the next header field in the second IPv6 header is the protocol number of the upper-layer header. When the first packet consists of the first IPv6 header, the first IPv6 extension header, the second IPv6 extension header, the upper-layer header, and the upper-layer payload in sequence, the value of the next header field in the second IPv6 header is the protocol number of the second IPv6 extension header. When the 1^{st} IPv6 extension header after the first IPv6 header is not an IPv6 extension header (that is, the first IPv6 extension header) including the BIER option, the value of the next header field in the second IPv6 header is optionally the same as the value of the next header field in the first IPv6 header. For example, when the first packet consists of the first IPv6 header, the second IPv6 extension header, the first IPv6 extension header, the upper-layer header, and the upper-layer payload in sequence, the value of the next header field in the second IPv6 header is the protocol number of the second IPv6 extension header.

A value of a hop limit field in the second IPv6 header is optionally obtained based on a value of the hop limit field in the first IPv6 header. The value of the hop limit field in the second IPv6 header is less than the value of the hop limit field in the first IPv6 header. For example, in the process of processing the first packet, the first routing device subtracts one from the value of the hop limit field in the IPv6 header. For example, when k-hop IPv6 transit nodes exist between the second host and the first routing device, each of the k-hop IPv6 transit nodes and the first routing device subtract one from the value of the hop limit field in the IPv6 header in sequence, so that a difference between the value of the hop limit field in the second IPv6 header and the value of the hop limit field in the first IPv6 header is k+1, where k is 0 or a positive integer.

A value of a payload length field in the second IPv6 header is optionally obtained based on the value of the payload length field in the first IPv6 header. The value of the payload length field in the second IPv6 header is less than the value of the payload length field in the first IPv6 header. For example, a difference between the value of the payload length field in the second IPv6 header and the value of the payload length field in the first IPv6 header is a length of the first IPv6 extension header.

In some embodiments, when the first packet further includes at least one second IPv6 extension header, the second packet also further includes the at least one second IPv6 extension header. As shown in (b) in FIG. 6, the at least one second IPv6 extension header in the second packet is encapsulated between the second IPv6 header and the upper-layer header. For example, in the process of processing the first packet, the first routing device keeps the at least one second IPv6 extension header unchanged, to obtain the second packet including the at least one second IPv6 extension header.

Optionally, the process in which the first routing device processes the first packet in Scenario 1 specifically includes the following step (1) and step (2).

Step (1): The first routing device obtains indication information based on the bitstring in the first packet.

A function of the indication information is equivalent to an identifier of a pop-up action, and the indication information indicates to pop up the IPv6 extension header including the BIER option. A form of the indication information is, for example, a character string. For example, the indication information is penultimate hop popping (penultimate hop popping, PHP), where the PHP means that when forwarding a BIERv6 packet to a host, the routing device needs to pop up the IPv6 extension header carrying the BIER option.

How the first routing device obtains the indication information in a packet forwarding stage includes a plurality of implementations. Optionally, a process in which the first routing device obtains the indication information includes the following step (1-1) and step (1-2).

Step (1-1): The first routing device obtains the identifier of the first host based on the bitstring.

The first routing device obtains the identifier of the first host based on the bit set in the bitstring. For example, the bitstring is 00000010, and the second bit in the bitstring is set. Therefore, the identifier of the first host obtained by the first routing device is 2.

Step (1-2): The first routing device obtains the indication information based on the identifier of the first host and a correspondence stored by the first routing device.

The correspondence includes the identifier of the first host and the indication information. The first routing device queries for the correspondence by using the identifier of the first host as an index, to obtain the indication information. There are a plurality of manners of obtaining the correspondence. In a possible implementation, the correspondence is obtained in a manner of static configuration. Specifically, a network administrator performs a configuration operation on the first routing device in advance, and the first routing device obtains the correspondence based on the configuration operation. In another possible implementation, a controller sends the correspondence to the first routing device, and the first routing device receives the correspondence from the controller.

Alternatively, the first routing device obtains the indication information in another manner other than step (1-1) and step (1-2). For example, the first routing device establishes and stores a correspondence between the bitstring and the indication information, and the first routing device obtains the indication information based on the bitstring and the correspondence.

Step (2): The first routing device obtains the second packet based on the indication information and the first packet.

As indicated by the indication information, the first routing device performs, on the first packet, an operation of popping up the IPv6 extension header including the BIER option, to obtain the second packet.

Scenario 2: The first host supports IPv4 but not IPv6, or a network between the first routing device and the first host supports IPv4 but not IPv6.

In Scenario 2, the second packet sent by the first routing device to the first host is an IPv4 packet. Specifically, the first routing device converts the IPv6 header and the first IPv6 extension header including the BIER option into the IPv4 header, to obtain the second packet. In this manner, problems of excessively high difficulty and excessively high overheads caused when the first host receives the IPv6 extension header including the BIER option are avoided, and a requirement for mutual communication between the first host and the second host in Scenario 2 is met.

FIG. 7 is a schematic diagram of comparison between the first packet and the second packet in Scenario 2. (a) in FIG. 7 is a schematic diagram of a format of the first packet in Scenario 2, and (b) in FIG. 7 is a schematic diagram of a format of the second packet in Scenario 2. As shown in (b) in FIG. 7, the second packet includes the IPv4 header, an upper-layer header, and an upper-layer payload. The following describes each part of the second packet.

The IPv4 header in the second packet is obtained based on the first IPv6 header in the first packet. The IPv4 header in the second packet mainly includes a source address field, a destination address field, a TTL field, a total length (total length) field, a header checksum (header checksum) field, and the like. The following describes a relationship between fields in the IPv4 header in the second packet and fields in the first IPv6 header.

A source address in the IPv4 header in the second packet is an IPv4 address of the second host. Optionally, the source address in the IPv4 header in the second packet is obtained based on a source address in the IPv6 header in the first packet and the correspondence stored by the first routing device. In a possible implementation, the first routing device stores a second correspondence, where the second correspondence includes an IPv6 address of the second host and the IPv4 address of the second host. The second correspondence is also referred to as a network address translation from IPv6 to IPv4 (net address transform IPv6 to IPv4, NAT64) source address correspondence, and is used to help the first routing device map the IPv6 address of the second host to the IPv4 address. Specifically, the first routing device obtains the IPv6 address of the second host from the source address field in the IPv6 header in the first packet, and queries for the second correspondence based on the IPv6 address of the second host, to obtain the IPv4 address of the second host. The first routing device obtains the second packet based on the IPv4 address of the second host and the first packet.

How the first routing device obtains the second correspondence includes a plurality of manners. The following uses several possible obtaining manners as an example for description. Refer to the following obtaining manner a to obtaining manner c.

Obtaining manner a: A second routing device advertises the second correspondence for the second host. The first routing device receives the second correspondence advertised by the second routing device.

The second routing device is a neighbor of the second host in the BIER domain. For example, with reference to FIG. 3, the second host is the host H1 in FIG. 3, and the second routing device is the routing device R1 in FIG. 3.

In a possible implementation, a process in which the second routing device advertises the second correspondence specifically includes: The second routing device generates a routing protocol packet. The routing protocol packet includes the second correspondence. The routing protocol packet includes but is not limited to an IGP packet or a BGP packet. The IGP packet is, for example, an IS-IS packet or an OSPF packet. The second routing device advertises, between routing devices in the BIER domain, the routing protocol packet.

Obtaining manner b: A network administrator performs a configuration operation on the first routing device, and the first routing device obtains the second correspondence based on the configuration operation.

Obtaining manner c: A controller obtains the second correspondence, and delivers the second correspondence to the first routing device, and the first routing device receives the second correspondence from the controller.

The destination address field in the IPv4 header in the second packet includes an IPv4 address of the first host. In a possible implementation, before receiving the first packet, the first routing device pre-stores the IPv4 address of the first host. For example, the first routing device stores a correspondence between the identifier of the first host and the IPv4 address of the first host. After receiving the first packet, the first routing device obtains the identifier of the first host based on the bitstring in the first packet. The first routing device queries for the correspondence between the identifier of the first host and the IPv4 address of the first host based on the identifier of the first host, to obtain the IPv4 address of the first host.

A value of the TTL field in the IPv4 header in the second packet is optionally obtained based on the value of the hop limit field in the first IPv6 header.

The total length field in the IPv4 header in the second packet indicates a total length of the second packet. The total length field in the IPv4 header in the second packet is optionally obtained based on the value of the payload length field in the first IPv6 header. For example, a total length of the IPv4 header in the second packet = a payload length of the first IPv6 header - a length of the first IPv6 extension header + a length of the IPv4 header (20 bytes). For another example, when the first packet not only includes the first IPv6 extension header but also includes the second IPv6 extension header, a total length of the IPv4 header in the second packet = a payload length of the first IPv6 header - a length of the first IPv6 extension header - a length of the second IPv6 extension header + a length of the IPv4 header (20 bytes).

The header checksum (header checksum) field in the IPv4 header in the second packet is obtained based on each field in the IPv4 header in the second packet.

Optionally, a process in which the first routing device processes the first packet in Scenario 2 specifically includes the following step (1) and step (2).

Step (1): The first routing device obtains indication information and the IPv4 address of the first host based on the bitstring in the first packet.

A function of the indication information is equivalent to an identifier of two actions: a pop-up action and an NAT64 action. The indication information indicates to pop up the IPv6 extension header including the BIER header and replace the IPv6 header with the IPv4 header. For example, the indication information is "PHP&NAT64", where the PHP means that when forwarding a BIERv6 packet to a host, the routing device needs to pop up the IPv6 extension header carrying the BIER option, & means and, and the NAT64 refers to network address translation from IPv6 to IPv4 (network address translation, NAT). To be specific, when forwarding a BIERv6 packet to a host, the routing device needs to replace the IPv6 header with the IPv4 header.

Optionally, step (1) includes the following step (1-1) and step (1-2).

Step (1-1): The first routing device obtains the identifier of the first host based on the bitstring.

Step (1-2): The first routing device obtains the indication information and the IPv4 address of the first host based on the identifier of the first host and a first correspondence.

The first correspondence includes the identifier of the first host, the indication information, and the IPv4 address of the first host.

Alternatively, the first routing device obtains the indication information and the IPv4 address of the first host in another manner other than step (1-1) and step (1-2). For example, the first routing device establishes and stores a correspondence between the bitstring and the indication information and between the bitstring and the IPv4 address of the first host, and first routing device obtains the indication information based on the bitstring and the correspondence.

Step (2): The first routing device obtains the second packet based on the indication information, the IPv4 address of the first host, and the first packet.

The upper-layer header in the second packet is the same as the upper-layer header in the first packet. For details of the upper-layer header in the second packet, refer to the descriptions of the upper-layer header in the first packet. The upper-layer payload in the second packet is the same as the upper-layer payload in the first packet. For details of the upper-layer payload in the second packet, refer to the descriptions of the upper-layer payload in the first packet. In some embodiments, in a process of processing the first packet, the first routing device keeps the upper-layer header and the upper-layer payload unchanged, to obtain the second packet.

The following describes possible cases of a checksum field in a UDP header in Scenario 1 and Scenario 2. Refer to the following Case 1 and Case 2.

Case 1: The routing device keeps a value of the checksum field in the UDP header as 0.

Specifically, the value of the checksum field in the UDP header in the first packet sent by the second host is 0. After receiving the first packet, the first routing device keeps the value of the checksum field in the UDP header unchanged, so that a value of a checksum field in a UDP header in the second packet is still 0. After the first host receives the second packet, if the first host determines that the value of the checksum field in the UDP header is 0, the first host cancels a step of checking a checksum.

By using the manner in Case 1, overheads caused by checksum calculation performed by the first routing device can be avoided.

Case 2: The routing device updates a value of the checksum field in the UDP header.

Specifically, the value of the checksum field in the UDP header in the first packet sent by the second host is non-zero. After receiving the first packet, the first routing device recalculates a checksum, and updates the checksum field in the first packet. In Case 2, a value of a checksum field in a UDP header in the second packet is usually non-zero. Optionally, the first routing device updates the checksum field in the first packet in a manner of incremental modification. Specifically, the first routing device obtains a checksum in the UDP header in the second packet based on the checksum in the first packet and a change status of a destination IP address field in an IP header between the second packet and the first packet.

S404: The first routing device sends the second packet to the first host serving as a BIER neighbor.

S405: The first host receives the second packet.

According to the method provided in this embodiment, when receiving a packet including the BIER option, the routing device pops up the IPv6 extension header including the BIER option and then sends the packet to the destination host, to avoid a case in which the packet received by the destination host includes the IPv6 extension header including the BIER option, and resolve the problems of excessively high difficulty and excessively high overheads caused when the destination host receives the IPv6 extension header including the BIER option. This reduces a difficulty of processing the packet by the destination host, and reduces overheads of processing the packet by the destination host.

The method shown in FIG. 4 focuses on a process of how the first routing device forwards a packet. The following describes a process of performing information advertisement by the first routing device. Optionally, the process of information advertisement described below is performed before the method shown in FIG. 4.

Optionally, the first routing device advertises the identifier of the first host between the routing devices in the BIER domain. In other words, a range in which an identifier of a host is advertised does not include the host, but includes the routing devices in the BIER domain. In a possible implementation, a process of advertising the identifier of the host includes the following step a and step b.

Step a: The first routing device generates a routing protocol packet.

The routing protocol packet includes but is not limited to an IGP packet or a border gateway protocol (border gateway protocol, BGP) packet. The IGP packet is, for example, an intermediate system to intermediate system (intermediate system to intermediate system, IS-IS) packet or an open shortest path first (open shortest path first, OSPF) packet. The routing protocol packet includes the identifier of the first host. In a possible implementation, the routing protocol packet includes a route prefix and a BFR-ID list associated with the route prefix. The routing prefix in the routing protocol packet includes the IPv6 address of the first routing device or a prefix of the IPv6 address. The BFR-ID list in the routing protocol packet includes the identifier of the first host.

Step b: The first routing device advertises the routing protocol packet between the routing devices in the BIER domain.

Another routing device in the BIER domain receives the routing protocol packet sent by the first routing device, obtains the identifier of the first host from the routing protocol packet, and generates and stores routing information corresponding to the first host based on the identifier of the first host, to forward the packet to the first host based on the routing information in the packet forwarding stage. The routing information includes a correspondence between the identifier of the first host and an IPv6 address of a BIER neighbor of a reachable host.

The foregoing describes how the first routing device advertises an identifier of a host for the host (the first host) in a proxying manner. When the first routing device accesses a plurality of hosts, similarly, the first routing device advertises an identifier of each host accessed by the first routing device. For example, if a third host is added to a network, the third host also needs to receive a packet from the second host via the first routing device, and the first routing device advertises an identifier of the third host. Specifically, after the third host is added, the first routing device regenerates a routing protocol packet, where the BFR-ID list in the routing protocol packet not only includes the identifier of the first host, but also includes the identifier of the third host. The first routing device re-advertises, between routing devices in the BIER domain, the routing protocol packet, so that each routing device generates and stores routing information corresponding to the third host.

That the routing device advertises the identifier of the first host is an optional step. In another possible implementation, the identifier of the first host is configured on each routing device in the BIER domain, so that each routing device in the BIER domain generates the routing information corresponding to the first host.

The routing device advertises the identifier of the host for the host in the proxying manner. This can reduce a configuration workload of the routing device and facilitate large-scale deployment. For example, if the proxying manner is not used, and the third host is added to the network, the third host also needs to receive a packet from the second host via the first routing device. In this case, a new configuration needs to be added for each routing device in the BIER domain or a configuration of each routing device in the BIER domain needs to be modified, so that each routing device generates the routing information corresponding to the third host, resulting in the heavy configuration workload. If the proxying manner is used, a new configuration is added for the first routing device or a configuration of the first routing device is modified, so that the first routing device advertises the identifier of the third host in the proxying manner. In this way, each routing device in the BIER domain may generate the routing information corresponding to the third host, thereby reducing the configuration workload.

Optionally, in Scenario 2 of the method shown in FIG. 4, the first routing device advertises, between the routing devices in the BIER domain, the correspondence between the IPv6 address of the first host and the IPv4 address of the first host. Each routing device other than the first routing device in the BIER domain receives the correspondence that is between the IPv6 address of the first host and the IPv4 address of the first host and that is advertised by the first routing device, and locally stores the correspondence between the IPv6 address of the first host and the IPv4 address of the first host. In a possible implementation, the first routing device generates a routing protocol packet. The routing protocol packet includes the correspondence between the IPv6 address of the first host and the IPv4 address of the first host. The routing protocol packet includes but is not limited to an IGP packet or a BGP packet. The IGP packet is, for example, an IS-IS packet or an OSPF packet. The first routing device advertises the routing protocol packet between the routing devices in the BIER domain.

The first routing device advertises the correspondence between the IPv6 address and the IPv4 address for the first host. When a BIERv6 packet generated by the first host needs to be forwarded to an IPv4 host, the routing device in the BIER domain can obtain, based on the correspondence advertised by the first routing device, an IPv4 source address corresponding to an IPv6 source address in the BIERv6 packet, to convert an IPv6 header in the BIERv6 packet into an IPv4 header and forward the packet. In this way, a requirement of forwarding the BIERv6 packet generated by the first host to the IPv4 host is met. In addition, this obviates a need to configure the correspondence between the IPv6 address of the first host and the IPv4 address of the first host for each routing device, thereby reducing the configuration workload.

The following describes the method shown in FIG. 4 by using an example with reference to five instances.

### Instance 1: PHP

Instance 1 is an example of how to apply the method shown in FIG. 4 based on the networking architecture shown in FIG. 4 in Scenario 1. In other words, Instance 1 describes how a routing device forwards a BIERv6 packet to a destination host in a scenario in which the destination host supports IPv6.

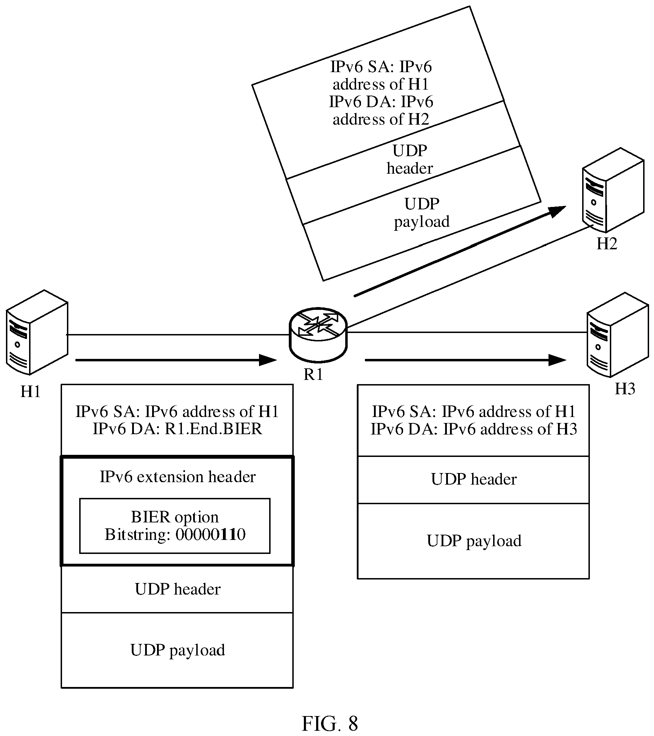

FIG. 8 is a schematic diagram of a scenario of Instance 1. With reference to FIG. 8, the second host in the method shown in FIG. 4 is a host H1 in FIG. 8, the first routing device in the method shown in FIG. 4 is a routing device R1 in FIG. 8, and the first host in the method shown in FIG. 4 is a host H2 or a host H3 in FIG. 8. In the method shown in FIG. 4, the first packet is a packet sent by the host H1 to the routing device R1, and the second packet is a packet sent by the routing device R1 to the host H2 or the host H3.

In Instance 1, the host H1 is a transmit end, and both the host H2 and the host H3 are receive ends. Optionally, no routing protocol is run between the routing device R1 and the host H1 or the host H2 or the host H3. The routing protocol is, for example, an IGP or a BGP. The routing device R1 configures an ID of each host. For example, the routing device R1 configures the ID of the host H1 to 1, the ID of the host H2 to 2, and the ID of the host H3 to 3. The ID of the host is similar to a BFR-ID in a BIER architecture. Both the ID of the host and the BFR-ID correspond to a bit in a bitstring in a packet and correspond to a bit in an FBM in a forwarding table. Different from the conventional BFR-ID, a node corresponding to the ID of the host is a host instead of a routing device. In addition, the host H1, the host H2, and the host H3 are all used as edge nodes in the BIER domain. The host H1, the host H2, or the host H3 directly constructs a BIER packet, instead of encapsulating a BIER option into a received multicast data packet to obtain a BIER packet. For example, the packet sent by the host H1 is (IPv6 header, IPv6 extension header <carrying BIER option>, UDP header, UDP payload), instead of an encapsulated (IPv6 header, IPv6 extension header <carrying IP header>, user multicast data packet).

In this embodiment, the routing device R1 establishes a correspondence between an IPv6 address of the host and the ID of the host, and indicates to pop up, when the packet is sent to the host, the IPv6 extension header including the BIER option. For example, the routing device R1 establishes the correspondence by using the following configurations.

| |
|---|
| BFR-neighbor BFR-ID 1 end-bier 2001:db8::1 stub PHP |
| BFR-neighbor BFR-ID 2 end-bier 2001:db8::2 stub PHP |
| BFR-neighbor BFR-ID 3 end-bier 2001:db8::3 stub PHP |

In the foregoing configurations, BFR-ID represents the ID of the host, and end-bier represents the IPv6 address of the host. For example, BFR-ID 1 represents that the ID of the host H1 is 1, BFR-ID 2 represents that the ID of the host H2 is 1, and BFR-ID 3 represents that the ID of the host H3 is 3. 2001 :db8:: 1 is the IPv6 address of the host H1. 2001 :db8::2 is the IPv6 address of the host H2. 2001:db8::3 is the IPv6 address of the host H3. stub represents that a node corresponding to the IPv6 address is a stub node. stub means that the node is not a routing device. PHP represents that a PHP action needs to be performed when a BIER packet is sent to the node, that is, the IPv6 extension header carrying the BIER option is popped up. Based on the foregoing correspondence, the routing information shown in Table 1 may be established on the routing device R1.

**Table 1**

| ID of a host | BIER neighbor of a reachable host | IPv6 address of the BIER neighbor | Action |
|---|---|---|---|
| 1 | Host H1 | 2001:db8::1 | PHP |
| 2 | Host H2 | 2001:db8::2 | PHP |
| 3 | Routing device R0 | 2001:db8::3 | PHP |

When the host H1 needs to send a packet to the host H2 and the host H3, the host H1 encapsulates the following packet and sends the packet to the routing device R1: (IPv6 header, IPv6 extension header <carrying BIER option>, UDP header, UDP payload). Both the second bit and the third bit in the bitstring in the BIER option in the packet sent by the host H1 are 1, for example, the bitstring is 00000110.

After receiving the packet sent by the host H1, the routing device R1 determines, based on the bitstring in the packet, which nodes the packet is to be sent to. Because both the second bit and the third bit in the bitstring in the packet are 1, the routing device R1 determines, based on the bitstring, that the packet needs to be sent to a node (the host H2) whose ID is 2 and a node (the host H3) whose ID is 3. In this case, the routing device R1 duplicates the packet, pops up the IPv6 extension header that includes the BIER option and that is in the packet, and sends the packet to the host H2 and the host H3 separately. A specific basis for the routing device R1 to perform the foregoing operations is the foregoing correspondence configured on the routing device R1. Specifically, the foregoing correspondence indicates that when the BFR-ID is 2, the packet needs to be sent to a node whose IPv6 address is 2001:db8::2, and the IPv6 extension header including the BIER option needs to be popped up before the packet is sent. Therefore, the packet sent by the routing device R1 to the host H2 is as follows: (IPv6 header, UDP header, UDP payload), where a destination address of the IPv6 header is 2001:db8::2. Similarly, the packet sent by the routing device R1 to the host H3 is as follows: (IPv6 header, UDP header, UDP payload), where the destination address of the IPv6 header is 2001 :db8: :3.

In a process of popping up the IPv6 extension header, optionally, the routing device R1 further updates a payload length field in the IPv6 header, and correspondingly updates a checksum field in the UDP header. Alternatively, the routing device R1 uses a UDP zero check method to keep the checksum field in the UDP header as 0.

Instance 2: PHP and advertisement of an ID of a host in a proxying manner

Instance 2 is an example of how to apply the method shown in FIG. 4 based on the networking architecture shown in FIG. 4 in Scenario 1. In other words, Instance 2 describes how a routing device forwards a BIERv6 packet to a destination host in a scenario in which the destination host supports IPv6.

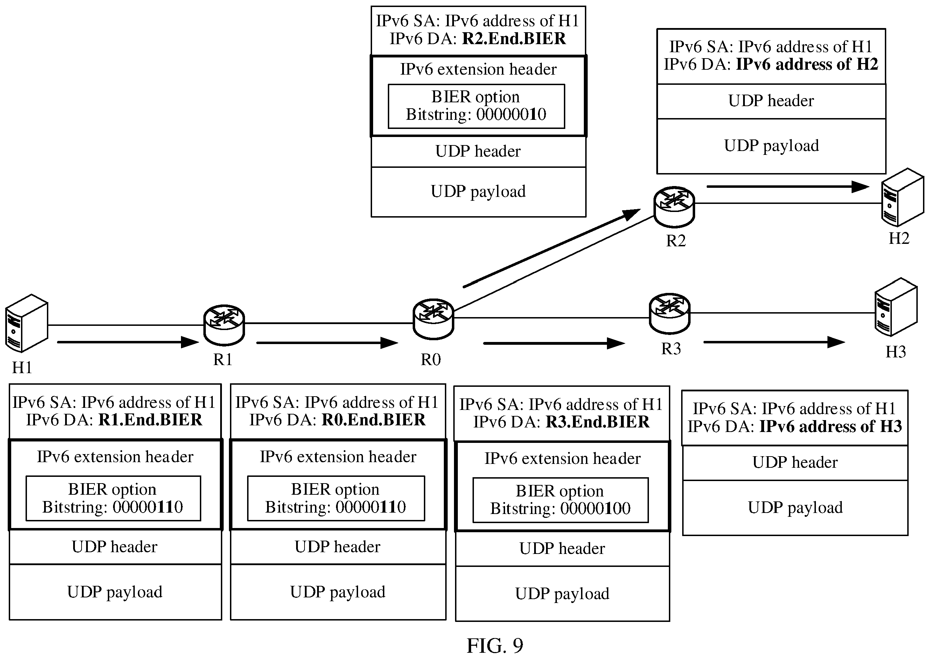

FIG. 9 is a schematic diagram of a scenario of Instance 2. With reference to FIG. 9, the second host in the method shown in FIG. 4 is a host H1 in FIG. 9, and the first packet in the method shown in FIG. 4 is a packet sent by the host H1. The first routing device in the method shown in FIG. 4 is a routing device R2 in FIG. 9, and the first host in the method shown in FIG. 4 is a host H2 in FIG. 9. In the method shown in FIG. 4, the second packet is a packet sent by the routing device R2. Alternatively, the first routing device in the method shown in FIG. 4 is a routing device R3 in FIG. 9, and the first host in the method shown in FIG. 4 is a host H3 in FIG. 9. In the method shown in FIG. 4, the second packet is a packet sent by the routing device R3.

In Instance 2, a routing protocol is run among a routing device R0, a routing device R1, the routing device R2, and the routing device R3, where the routing protocol is, for example, IS-IS, OSPF, or BGP.

The routing device R1 establishes a correspondence between an IPv6 address of the host H1 and an ID of the host H1. The routing device R1 advertises the correspondence between the IPv6 address of the host H1 and the ID of the host H1 according to the routing protocol. For example, the routing device R1 establishes the correspondence by using the following configuration.

| |
|---|
| BFR-neighbor BFR-ID 1 end-bier 2001:db8::1 stub PHP |

In the foregoing configuration, the IPv6 address of the host H1 is 2001:db8:: 1 and the ID of the host H1 is 1. The routing device R1 establishes and saves the correspondence between the IPv6 address = 2001: db8: : 1 and ID = 1 based on the foregoing configuration, and advertises information about ID = 1 to another node that runs the routing protocol. For example, the routing device R1 advertises the following information: (Route prefix = IP address of the routing device R1, information associated with the route prefix: BFR-ID = 1).

Similarly, the routing device R2 establishes, for example, a correspondence by using the following configuration.

| |
|---|
| BFR-neighbor BFR-ID 2 end-bier 2001:db8::2 stub PHP |

In the foregoing configuration, an IPv6 address of the host H2 is 2001:db8::2 and an ID of the host H2 is 2. The routing device R2 establishes and saves the correspondence between the IPv6 address = 2001:db8::2 and ID = 2 based on the foregoing configuration, and advertises information about ID = 2 to another node that runs the routing protocol.

Similarly, the routing device R3 establishes, for example, a correspondence by using the following configuration.

| |
|---|
| BFR-neighbor BFR-ID 3 end-bier 2001:db8::3 stub PHP |

In the foregoing configuration, an IPv6 address of the host H3 is 2001:db8::3 and an ID of the host H3 is 3. The routing device R3 establishes and saves the correspondence between the IPv6 address = 2001:db8::3 and ID = 3 based on the foregoing configuration, and advertises information about ID = 3 to another node that runs the routing protocol.

Based on routing information advertised by the routing device R1, the routing device R2, and the routing device R3, each routing device optionally further establishes routing information about reaching ID = 1, ID = 2, or ID = 3. For example, the routing information established on the routing device R1 includes content shown in the following Table 2.

**Table 2**

| ID of a host | BIER neighbor of a reachable host | IPv6 address of the BIER neighbor | Action |
|---|---|---|---|
| 1 | Host H1 | 2001:db8::1 | PHP |
| 2 | Routing device R0 | Routing device R0 | / |
| 3 | Routing device R0 | Routing device R0 | / |

Similarly, the routing information established on the routing device R2 includes, for example, content shown in the following Table 3.

**Table 3**

| ID of a host | BIER neighbor of a reachable host | IPv6 address of the BIER neighbor | Action |
|---|---|---|---|
| 1 | Routing device R0 | Routing device R0 | / |
| 2 | Host H2 | 2001:db8::2 | PHP |
| 3 | Routing device R0 | Routing device R0 | / |

Similarly, the routing information established on the routing device R3 includes, for example, content shown in the following Table 4.

**Table 4**

| ID of a host | BIER neighbor of a reachable host | IPv6 address of the BIER neighbor | Action |
|---|---|---|---|
| 1 | Routing device R0 | Routing device R0 | / |
| 2 | Routing device R0 | Routing device R0 | / |
| 3 | Host H3 | 2001:db8::3 | PHP |

Similarly, the routing information established on the routing device R0 includes, for example, content shown in the following Table 5.

**Table 5**

| ID of a host | BIER neighbor of a reachable host | IPv6 address of the BIER neighbor |
|---|---|---|
| 1 | Routing device R1 | Routing device R1 |
| 2 | Routing device R2 | Routing device R2 |
| 3 | Routing device R3 | Routing device R3 |

When the host H1 needs to send a packet to the host H2 and the host H3, the host H1 encapsulates the following packet and sends the packet to the routing device R1: (IPv6 header, IPv6 extension header <carrying BIER option>, UDP header, UDP payload). Both the second bit and the third bit in a bitstring in the BIER option in the packet are 1, for example, the bitstring is 0000 0110.

After receiving the packet, the routing device R1 determines, based on the routing information stored in the routing device R1, that a next BIER neighbor of a node whose ID = 2 and a next BIER neighbor of a node whose ID = 3 are both the routing device R0. Therefore, the routing device R1 sends the packet to the routing device R0, and the bitstring in the packet is still 00000110.

After receiving the packet, the routing device R0 determines, based on the routing information stored in the routing device R0, that the packet needs to be sent to the routing device R2 and the routing device R3. The bitstring in the packet sent by the routing device R0 to the routing device R2 is updated to 0000 0010, and the bitstring in the packet sent by the routing device R0 to the routing device R3 is updated to 00000100.

After receiving the packet, the routing device R2 determines, based on the routing information stored in the routing device R2, that the packet needs to be sent to the host H2; and the routing device R2 determines, based on the correspondence configured on the routing device R2, that a PHP operation needs to be performed on the packet when the packet is sent to the host H2. Therefore, the packet sent by the routing device R2 to the host H2 is as follows: (IPv6 header, UDP header, UDP payload), where the destination address of the IPv6 header is 2001:db8::2.

After receiving the packet, the routing device R3 determines, based on the routing information stored in the routing device R3, that the packet needs to be sent to the host H3; and the routing device R3 determines, based on the correspondence configured on the routing device R3, that a PHP operation needs to be performed on the packet when the packet is sent to the host H3. Therefore, the packet sent by the routing device R3 to the host H3 is as follows: (IPv6 header, UDP header, UDP payload), where the destination address of the IPv6 header is 2001:db8::3.

In a process of popping up the IPv6 extension header, the routing device R2 or the routing device R3 optionally further updates a payload length field in the IPv6 header, and correspondingly updates a checksum field in the UDP header. Alternatively, the routing device R2 or the routing device R3 uses a UDP zero check method to keep the checksum field in the UDP header as 0.

The following uses examples to describe a packet in each phase in this embodiment. Refer to the following Example (1) to Example (3). In the following example, the IPv6 extension header carrying the BIER option is a destination options header (destination options header), and a length of the destination options header is 48 bytes. An upper-layer header is the UDP header (with a length of 8 bytes). A length of the UDP payload is 492 bytes. SA represents content of a source address (source address) field, DA represents content of a destination address (destination address) field, HL represents content of a hop limit field, NH represents content of a next header field, Plen represents content of the payload length field, Sport represents content of a source port (source port) field, Dport represents content of a destination port (destination port) field, and Csum represents content of the checksum (checksum) field.

### Example (1)

The following Table 6 shows a format of a packet in each phase when the packet is forwarded between different devices.

**Table 6**

| Packet phase | Packet format |
|---|---|
| H1->R1 | IPv6 header (SA = H1, DA = R1.End.BIER, HL = 128, NH = 60, Plen = 548)//60 represents a DOH header; |
| | IPv6 extension header (NH = 17; BIER option <bitstring = 0110>)//17 represents that an upper-layer header is a UDP header; and |
| | UDP header (Sport = 12345, Dport = 4321, Len = 492, Csum = 0)//492 represents that a length of an upper-layer payload is 492 bytes. |
| R1->R0 | IPv6 header (SA = H1, DA = R0.End.BIER, HL = 127, NH = 60, Plen = 548)//DA changes, and one is subtracted from an HL value; |
| | IPv6 extension header (NH = 17; BIER option <bitstring = 0110>)//17 represents that an upper-layer header is a UDP header; and |
| | UDP header (Sport = 12345, Dport = 4321, Len = 492, Csum = 0)//492 represents that a length of an upper-layer payload is 492 bytes. |
| R0->R2 | IPv6 header (SA = H1, DA = R2.End.BIER, HL = 126, NH = 60, Plen = 548)//DA changes, and one is subtracted from an HL value; |
| | IPv6 extension header (NH = 17; BIER option <bitstring = 0010>)//17 represents that an upper-layer header is a UDP header; and |
| | UDP header (Sport = 12345, Dport = 4321, Len = 492, Csum = 0)//492 represents that a length of an upper-layer payload is 492 bytes. |
| R0->R3 | IPv6 header (SA = H1, DA = R3.End.BIER, HL = 126, NH = 60, Plen = 548)//DA changes, and one is subtracted from an HL value; |
| | IPv6 extension header (NH = 17; BIER option <bitstring = 0100>)//17 represents that an upper-layer header is a UDP header; and |
| | UDP header (Sport = 12345, Dport = 4321, Len = 492, Csum = 0)//492 represents that a length of an upper-layer payload is 492 bytes. |
| R2->H2 | IPv6 header (SA = H1, DA = H2, HL = 125, NH = 17, Plen = 500)//DA changes, one is subtracted from an HL value, and NH and Plen change; and |
| | UDP header (Sport = 12345, Dport = 4321, Len = 492, Csum = 0)//492 represents that a length of an upper-layer payload is 492 bytes. |
| R3->H3 | IPv6 header (SA = H1, DA = H3, HL = 125, NH = 17, Plen = 500)//DA changes, one is subtracted from an HL value, and NH and Plen change; and |
| | UDP header (Sport = 12345, Dport = 4321, Len = 492, Csum = 0)//492 represents that a length of an upper-layer payload is 492 bytes. |

### Example (2)

A difference between Example (2) and Example (1) is that in Example (2), the packet sent by the host H1 is a packet that has undergone IPv6 fragmentation. In this case, this solution is still applicable. The packet sent by the host H1 includes a fragment header. The fragment header is encapsulated between the destination options header carrying the BIER option and the UDP header. The fragment header occupies 8 bytes, and the corresponding Plen changes to 556. The following Table 7 shows a format of a packet in each phase when the packet is forwarded between different devices in Example (2).

**Table 7**

| Packet phase | Packet format |
|---|---|
| H1->R1 | IPv6 header (SA = H1, DA = R1.End.BIER, HL = 128, NH = 60, Plen = 556)//60 represents a DOH header; |
| | IPv6 extension header (NH = 44; BIER option <bitstring = 0110>)//44 represents a fragment header; |
| | IPv6 extension header (NH = 17; fields in the fragment header <omitted>)//17 represents a UDP header; and |
| | UDP header (Sport = 12345, Dport = 4321, Len = 492, Csum = 0)//492 represents that a length of an upper-layer payload is 492 bytes. |
| R1->R0 | IPv6 header (SA = H1, DA = R0.End.BIER, HL = 127, NH = 60, Plen = 556)//DA changes, and one is subtracted from an HL value; |
| | IPv6 extension header (NH = 44; BIER option <bitstring = 0110>)//44 represents a fragment header; |
| | IPv6 extension header (NH = 17; fields in the fragment header <omitted>)//17 represents a UDP header; and |
| | UDP header (Sport = 12345, Dport = 4321, Len = 492, Csum = 0)//492 represents that a length of an upper-layer payload is 492 bytes. |
| R0->R2 | IPv6 header (SA = H1, DA = R2.End.BIER, HL = 126, NH = 60, Plen = 556)//DA changes, and one is subtracted from an HL value; |
| | IPv6 extension header (NH = 44; BIER option <bitstring = 0010>)//44 represents a fragment header; |
| | IPv6 extension header (NH = 17; fields in the fragment header <omitted>)//17 represents a UDP header; and |
| | UDP header (Sport = 12345, Dport = 4321, Len = 492, Csum = 0)//492 represents that a length of an upper-layer payload is 492 bytes. |
| R0->R3 | IPv6 header (SA = H1, DA = R3.End.BIER, HL = 126, NH = 60, Plen = 556)//DA changes, and one is subtracted from an HL value; |
| | IPv6 extension header (NH = 44; BIER option <bitstring = 0100>)//44 represents a fragment header; |
| | IPv6 extension header (NH = 17; fields in the fragment header <omitted>)//17 represents a UDP header; and |
| | UDP header (Sport = 12345, Dport = 4321, Len = 492, Csum = 0)//492 represents that a length of an upper-layer payload is 492 bytes. |
| R2->H2 | IPv6 header (SA = H1, DA = H2, HL = 125, NH = 44, Plen = 508)//DA changes, one is subtracted from an HL value, and NH and Plen change; |
| | IPv6 extension header (NH = 17; fields in a fragment header <omitted>)//17 represents a UDP header; and |
| | UDP header (Sport = 12345, Dport = 4321, Len = 492, Csum = 0)//492 represents that a length of an upper-layer payload is 492 bytes. |
| R3->H3 | IPv6 header (SA = H1, DA = H3, HL = 125, NH = 44, Plen = 508)//DA changes, one is subtracted from an HL value, and NH and Plen change; |
| | IPv6 extension header (NH = 17; fields in a fragment header <omitted>)//17 represents a UDP header; and |
| | UDP header (Sport = 12345, Dport = 4321, Len = 492, Csum = 0)//492 represents that a length of an upper-layer payload is 492 bytes. |

On the host H2 and the host H3, a host operating system reassembles (reassembly) a plurality of packet fragments with fragment headers, that is, reassembles two or more packet fragments into one packet. The first packet fragment includes the UDP header and the upper-layer payload. Table 7 shows the 492-byte upper-layer payload, and the 2^{nd} packet fragment includes only the upper-layer payload.

### Example (3)

A difference between Example (3) and Example (1) is that the packet sent by the host H1 is an encrypted packet. For example, if the host H1 uses a method applicable to the internet security protocol (internet protocol security, IPSEC) ESP for encryption, an IPv6 ESP extension header is added between the DOH header and the upper-layer header (UDP header) in the packet, and the UDP header and the UDP payload are encrypted.

In the method provided in this embodiment, the routing device advertises a BFR-ID of a host in the proxying manner. This can reduce a configuration workload of the routing device. For example, a new host H4 is connected to the routing device R3, and the host H4 also needs to receive the packet sent by the host H1, provided that a new configuration for the routing device R3 is added or a configuration of the routing device R3 is modified, and then the routing device R3 advertises a BFR-ID of the host H4 in the proxying manner. For example, before the host H4 is added, the routing device R3 may advertise the following information: (route prefix = IP address of R3, information associated with the route prefix: BFR-ID list <3>); after the host H4 is added, the routing device R3 may advertise updated information: (route prefix = IP address of R3, information associated with the route prefix: BFR-ID list <3, 4>), where 3 is the ID of the host H3, and 4 is an ID of the host H4.

If the proxying manner is not used, for the newly added host H4, a new configuration needs to be added for each routing device such as the routing device R1, the routing device R0, the routing device R2, and the routing device R3, or a configuration of each routing device needs to be modified, so that each routing device such as the routing device R1, the routing device R0, the routing device R2, and the routing device R3 generates routing and forwarding information corresponding to the host H4.

Instance 3: PHP, advertisement of an ID of a host in a proxying manner, and NAT64 translation

Instance 3 is an example of how to apply the method shown in FIG. 4 based on the networking architecture shown in FIG. 4 in Scenario 2. In other words, Instance 3 describes how a routing device forwards a BIERv6 packet to a destination host in a scenario in which the destination host supports IPv4 but not IPv6, or a network between the routing device and the destination host supports IPv4 but not IPv6.

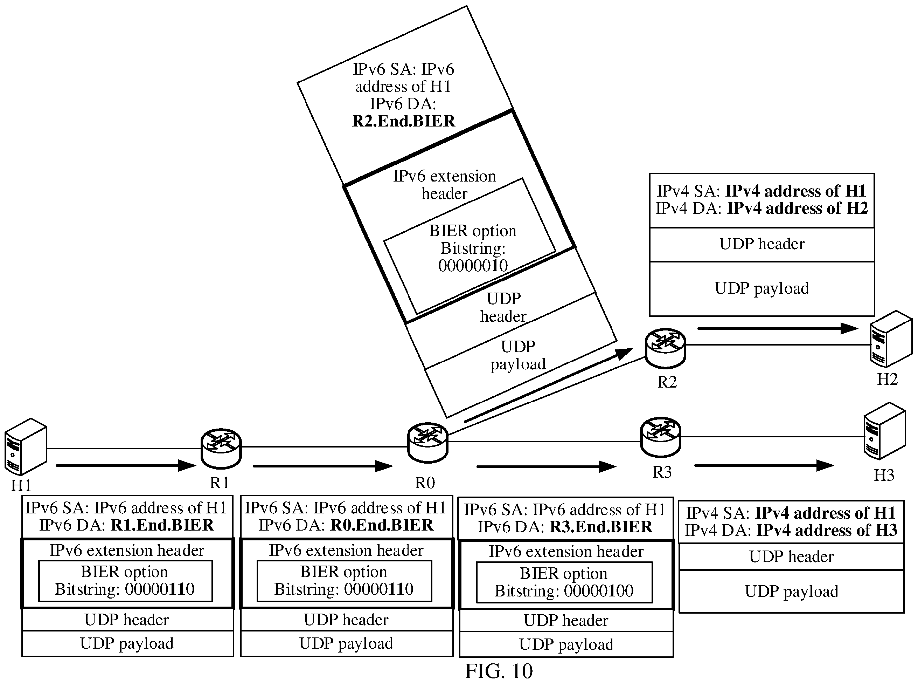

FIG. 10 is a schematic diagram of a scenario of Instance 3. With reference to FIG. 10, the second host in the method shown in FIG. 4 is a host H1 in FIG. 10, and the first packet in the method shown in FIG. 4 is a packet sent by the host H1. The first routing device in the method shown in FIG. 4 is a routing device R2 in FIG. 10, and the first host in the method shown in FIG. 4 is a host H2 in FIG. 10. In the method shown in FIG. 4, the second packet is a packet sent by the routing device R2. Alternatively, the first routing device in the method shown in FIG. 4 is a routing device R3 in FIG. 10, and the first host in the method shown in FIG. 4 is a host H3 in FIG. 10. In the method shown in FIG. 4, the second packet is a packet sent by the routing device R3.

FIG. 10 shows a network architecture on which Instance 3 is based. In this embodiment, a routing protocol is run among a routing device R0, a routing device R1, the routing device R2, and the routing device R3, where the routing protocol is, for example, IS-IS, OSPF, or BGP.

In this embodiment, the host H1 serves as a packet sending node, the packet sent by the host H1 includes an IPv6 header and an IPv6 extension header, and the IPv6 extension header carries a bitstring. The host H2 and the host H3 serve as packet receiving nodes, and the host H2 and the host H3 receive packets by using IPv4.

The routing device R1 establishes a correspondence between an IPv6 address of the host H1 and an IPv4 address of the host H1, and advertises the correspondence between the IPv6 address of the host H1 and the IPv4 address of the host H1 according to the routing protocol. For example, the routing device R1 establishes the correspondence by using the following configuration.

| |
|---|
| BFR-neighbor BFR-ID 0 end-bier 2001:db8::1 mapping 192.168.1.101 |

In the foregoing configuration, the IPv6 address of the host H1 is 2001:db8:: 1 and the IPv4 address of the host H1 is 192.168.1.101. In the foregoing configuration, BFR-ID = 0 represents an invalid ID. Each routing device does not need to establish routing information about reaching the invalid ID. If the routing device R1 serves as a receiving node, a valid ID needs to be configured for the routing device R1. For example, BFR-ID = 1 is configured for the routing device R1, and the following describes establishment of a routing table by using an example in which BFR-ID = 1 is configured.

The routing device R1 advertises, according to the routing protocol, the correspondence between the IPv6 address = 2001:db8::1 of the host H1 and the IPv4 address = 192.168.1.101 of the host H1 to another node running the routing protocol. A specific advertisement method may be performed by using an existing routing protocol advertisement mechanism. In this embodiment, the correspondence between the IPv6 address = 2001:db8::1 of the host H1 and the IPv4 address = 192.168.1.101 of the host H1 is referred to as a NAT64 source address correspondence. In this embodiment, when the routing device R1 serves as a sending node, stub and PHP in the configuration are optional parameters. The configuration optionally does not include the stub and PHP. When the routing device R1 serves as the receiving node, the configuration includes the stub and PHP.

The routing device advertises the correspondence between the IPv6 address of the host and the IPv4 address of the host, so that another routing device that needs the correspondence obtains the correspondence to perform packet forwarding, and the configuration is simplified. In this embodiment, routing devices that need to obtain the NAT64 source address correspondence are the routing device R2 and the routing device R3. If the correspondence between the IPv6 address of the host and the IPv4 address of the host is advertised without the routing protocol, the correspondence needs to be configured on the routing device R2 and the routing device R3, so that when the routing device R2 and the routing device R3 each send a packet to the IPv4 host, the IPv4 source address corresponding to the IPv6 source address is obtained based on the correspondence. The routing protocol is, for example, IGP such as IS-IS or OSPF, or BGP.

In this example, the routing device R2 establishes a correspondence by using the following configuration.

| |
|---|
| BFR-neighbor BFR-ID 2 stub PHP NAT64 192.168.2.102 |

In the foregoing configuration, an IPv4 address of the host H2 is 192.168.2.102 and an ID of the host H2 is 2. The routing device R2 stores the correspondence between ID = 2 and NAT64 192.168.2.102, and advertises, according to the routing protocol, information about ID = 2 to another node running the routing protocol.

Similarly, the routing device R3 establishes, for example, a correspondence by using the following configuration.

| |
|---|
| BFR-neighbor BFR-ID 3 stub PHP NAT64 192.168.3.103 |

In the foregoing configuration, an IPv4 address of the host H3 is 192.168.3.103 and an ID of the host H3 is 3. The routing device R3 stores the correspondence between ID = 3 and NAT64 192.168.3.103, and advertises, according to the routing protocol, information about ID = 3 to another node running the routing protocol. Based on routing information advertised by the routing device R1, the routing device R2, and the routing device R3, each routing device optionally further establishes routing information about reaching ID = 1, routing information about reaching ID = 2, and routing information about reaching ID = 3. For example, the routing information established on the routing device R1 includes content shown in the following Table 8.

**Table 8**

| ID of a host | BIER neighbor of a reachable host | IPv6 address of the BIER neighbor |
|---|---|---|
| 1 | Host H1 | 2001:db8::1 |
| 2 | Routing device R0 | Routing device R0 |
| 3 | Routing device R0 | Routing device R0 |

Similarly, the routing information established on the routing device R2 includes, for example, content shown in the following Table 9.

**Table 9**

| ID of a host | BIER neighbor of a reachable host | IPv6 address of the BIER neighbor | IPv4 address of a next BIER neighbor | Action |
|---|---|---|---|---|
| 1 | Routing device R0 | Routing device R0 | / | / |
| 2 | Host H2 | / | 192.168.2.102 | PHP and NAT64 |
| 3 | Routing device R0 | Routing device R0 | / | / |

Similarly, the routing information established on the routing device R3 includes, for example, content shown in the following Table 10.

**Table 10**

| ID of a host | BIER neighbor of a reachable host | IPv6 address of the BIER neighbor | IPv4 address of a next BIER neighbor | Action |
|---|---|---|---|---|
| 1 | Routing device R0 | Routing device R0 | / | / |
| 2 | Routing device R0 | Routing device R0 | / | / |
| 3 | Host H3 | / | 192.168.3.103 | PHP and NAT64 |

Similarly, the routing information established on the routing device R0 includes, for example, content shown in the following Table 11.

**Table 11**

| ID of a host | BIER neighbor of a reachable host | IPv6 address of the BIER neighbor |
|---|---|---|
| 1 | Routing device R1 | Routing device R1 |
| 2 | Routing device R2 | Routing device R2 |
| 3 | Routing device R3 | Routing device R3 |

When the host H1 needs to send a packet to the host H2 and the host H3, the host H1 encapsulates the following packet and sends the packet to the routing device R1: (IPv6 header, IPv6 extension header <carrying BIER option>, UDP header, UDP payload), where both the second bit and the third bit in a bitstring in the BIER option are 1, for example, the bitstring is 00000110.

After receiving the packet, the routing device R1 determines, based on the bitstring in the packet, which nodes the packet is to be sent to. Specifically, because both the second bit and the third bit in the bitstring are 1, the routing device R1 determines, based on the routing information in the routing device R1, that a next BIER neighbor of a node whose ID = 2 and a next BIER neighbor of a node whose ID = 3 are both the routing device R0. Therefore, the routing device R1 sends the packet to the routing device R0, and the bitstring in the packet is still 00000110.

After receiving the packet, the routing device R0 determines, based on the routing information stored in the routing device R0, that the packet needs to be sent to the routing device R2 and the routing device R3. The routing device R0 duplicates the packet, updates the bitstring in the packet, and sends the packet with the updated bitstring to the routing device R2 and the routing device R3 separately. The bitstring in the packet sent by the routing device R0 to the routing device R2 is updated to 00000010, and the bitstring in the packet sent by the routing device R0 to the routing device R3 is updated to 00000100.

After receiving the packet, the routing device R2 determines, based on the routing information stored in the routing device R2, that the packet needs to be sent to the host H2; and the routing device R2 determines, based on the correspondence configured on the routing device R2, that PHP and NAT64 operations need to be performed on the packet when the packet is sent to the host H2. Therefore, the packet sent by the routing device R2 to the host H2 is as follows: (IPv4 header, UDP header, UDP payload). A destination address in the IPv4 header in the packet is 192.168.2.102. A source address in the IPv4 header is obtained based on the correspondence between the source address 2001:db8::1 in the IPv6 header and the NAT64 source address. In this example, the IPv4 address corresponding to the source address 2001:db8::1 is 192.168.1.101. Therefore, the source address in the IPv4 header in the packet is 192.168.1.101, a TTL field in the IPv4 header is optionally obtained from a hop limit field in the IPv6 header, a total length field in the IPv4 header is optionally obtained by converting a payload length field in the IPv6 header, and a header checksum in the IPv4 header is optionally calculated based on each field in the IPv4 header.

After receiving the packet, the routing device R3 determines, based on the routing information stored in the routing device R3, that the packet needs to be sent to the host H3; and the routing device R3 determines, based on the correspondence configured on the routing device R3, that PHP and NAT64 operations need to be performed on the packet when the packet is sent to the host H3. Therefore, the packet sent by the routing device R3 to the host H3 is as follows: (IPv4 header, UDP header, UDP payload), where the destination address in the IPv4 header is 192.168.3.103, and the source address in the IPv4 header is obtained based on the correspondence between the source address 2001:db8::1 in the IPv6 packet header and the NAT64 source address. In this example, the IPv4 address corresponding to 2001:db8::1 is 192.168.1.101. Therefore, the source address in the IPv4 header in the packet is 192.168.1.101, the TTL field in the IPv4 header may be obtained from the hop limit field in the IPv6 header, the total length field in the IPv4 header is optionally obtained by converting the payload length field in the IPv6 header, and the header checksum in the IPv4 header is optionally calculated based on each field in the IPv4 header.

In a process of popping up the IPv6 extension header and changing the IPv6 header into the IPv4 header, optionally, the routing device R2 or the routing device R3 further updates a checksum field in the UDP header based on a difference between the IPv6 header and the IPv4 header. Alternatively, optionally, the routing device R2 or the routing device R3 uses a UDP zero check method to keep the checksum field in the UDP header as 0.

Instance 4: A routing device performs PHP, and performs iteration based on an address of a host and generates a BIER route.

For a packet forwarding scenario in Instance 4, still refer to FIG. 9. In this embodiment, a routing protocol is run among a routing device R0, a routing device R1, a routing device R2, and a routing device R3, where the routing protocol is, for example, IS-IS, OSPF, or BGP.

The routing protocol is responsible for establishing routing information based on an address of a host H1, a host H2, or a host H3. For example, IPv6 addresses of the host H1, the host H2, and the host H3 are 2001:db8::1, 2001:db8::2, and 2001:db8::2 respectively. The routing device R1 establishes the routing information of these hosts. Similarly, the routing device R0, the routing device R2, and the routing device R3 also establish the routing information about reaching these hosts.

For example, the routing information established on the routing device R1 includes content shown in the following Table 12.

**Table 12**

| Address | BIER neighbor of a reachable host |
|---|---|
| 2001:db8::1 | Host H1 or a node of a reachable host H1 |
| 2001:db8::2 | Routing device R0 |
| 2001:db8::3 | Routing device R0 |

Similarly, the routing information established on the routing device R0 includes, for example, content shown in the following Table 13.

**Table 13**

| Address | BIER neighbor of a reachable host |
|---|---|
| 2001:db8::1 | Routing device R1 |
| 2001:db8::2 | Routing device R2 |
| 2001:db8::3 | Routing device R3 |

Similarly, the routing information established on the routing device R2 includes, for example, content shown in the following Table 14.

**Table 14**

| Address | BIER neighbor of a reachable host |
|---|---|
| 2001:db8::1 | Routing device R0 |
| 2001:db8::2 | Host H2 or a node of a reachable host H2 |
| 2001:db8::3 | Routing device R0 |

Similarly, the routing information established on the routing device R3 includes, for example, content shown in the following Table 15.

**Table 15**

| Address | BIER neighbor of a reachable host |
|---|---|
| 2001:db8::1 | Routing device R0 |
| 2001:db8::2 | Routing device R0 |
| 2001:db8::3 | Host H3 or a node of a reachable host H3 |

A correspondence between the address of the host H1 and an ID of the host H1, a correspondence between the address of the host H2 and an ID of the host H2, and a correspondence between the address of the host H3 and an ID of the host H3 are configured on the routing device R1, the routing device R0, the routing device R2, and the routing device R3 respectively. These correspondences are optionally configured on the routing device R1, the routing device R0, the routing device R2, or the routing device R3 through copying and pasting. For example, the following configurations are pasted to the routing device R1, the routing device R0, the routing device R2, and the routing device R3.

| |
|---|
| mapping host BFR-ID 1 end-bier 2001:db8::1 |
| mapping host BFR-ID 2 end-bier 2001:db8::2 |
| mapping host BFR-ID 3 end-bier 2001:db8::3 |

host represents information about a host, and also represents that although the node serves as a BIER node, the node supports only host behavior of the BIER node, but does not support routing and forwarding behavior of the BIER node. When a packet is sent to the node, an IPv6 extension header including a BIER option needs to be popped up; end-bier is the IPv6 address of the host; BFR-ID is the ID of the host; and mapping represents that this configuration is a correspondence between the address of the host and the ID of the host.

The routing device R1 establishes the correspondence between the address of the host H1 and the ID of the host H1, the correspondence between the address of the host H2 and the ID of the host H2, and the correspondence between the address of the host H3 and the ID of the host H3 based on the foregoing configurations. The routing device R1 may advertise the correspondences between the addresses of these hosts and the IDs of these hosts without a need for the routing protocol. In addition, the routing device R1 further establishes, based on the foregoing configuration information, routing information about reaching ID = 1, routing information about reaching ID = 2, and routing information about reaching ID = 3.

Similarly, the routing device R2 establishes the correspondence between the address of the host H1 and the ID of the host H1, the correspondence between the address of the host H2 and the ID of the host H2, and the correspondence between the address of the host H3 and the ID of the host H3 based on the foregoing configurations. The routing device R2 may advertise these correspondences without a need for the routing protocol. In addition, the routing device R2 further establishes, based on the foregoing configuration information and the foregoing routing information, routing information about reaching ID = 1, routing information about reaching ID = 2, and routing information about reaching ID = 3.

Similarly, the routing device R3 establishes the correspondence between the address of the host H1 and the ID of the host H1, the correspondence between the address of the host H2 and the ID of the host H2, and the correspondence between the address of the host H3 and the ID of the host H3 based on the foregoing configurations. The routing device R3 may advertise these correspondences without a need for the routing protocol. In addition, the routing device R3 further establishes, based on the foregoing configuration information and the foregoing routing information, routing information about reaching ID = 1, routing information about reaching ID = 2, and routing information about reaching ID = 3.

Similarly, the routing device R0 establishes the correspondence between the address of the host H1 and the ID of the host H1, the correspondence between the address of the host H2 and the ID of the host H2, and the correspondence between the address of the host H3 and the ID of the host H3 based on the foregoing configurations. The routing device R0 may advertise these correspondences without a need for the routing protocol. In addition, the routing device R0 further establishes, based on the foregoing configuration information and the foregoing routing information, routing information about reaching ID = 1, routing information about reaching ID = 2, and routing information about reaching ID = 3.

For example, BIER routing information established on the routing device R1 includes content shown in the following Table 16.

**Table 16**

| ID of a host | BIER neighbor of a reachable host | IPv6 address of the BIER neighbor | Action |
|---|---|---|---|
| 1 | Host H1 | 2001:db8::1 | PHP |
| 2 | Routing device R0 | Routing device R0 | / |
| 3 | Routing device R0 | Routing device R0 | / |

Similarly, BIER routing information established on the routing device R2 includes, for example, content shown in the following Table 17.

**Table 17**

| ID of a host | BIER neighbor of a reachable host | IPv6 address of the BIER neighbor | Action |
|---|---|---|---|
| 1 | Routing device R0 | Routing device R0 | / |
| 2 | Host H2 | 2001:db8::2 | PHP |
| 3 | Routing device R0 | Routing device R0 | / |

Similarly, BIER routing information established on the routing device R3 includes, for example, content shown in the following Table 18.

**Table 18**

| ID of a host | BIER neighbor of a reachable host | IPv6 address of the BIER neighbor | Action |
|---|---|---|---|
| 1 | Routing device R0 | Routing device R0 | / |
| 2 | Routing device R0 | Routing device R0 | / |
| 3 | Host H3 | 2001:db8::3 | PHP |

Similarly, BIER routing information established on the routing device R0 includes, for example, content shown in the following Table 19.

**Table 19**

| ID of a host | BIER neighbor of a reachable host | IPv6 address of the BIER neighbor |
|---|---|---|
| 1 | Routing device R1 | Routing device R1 |
| 2 | Routing device R2 | Routing device R2 |
| 3 | Routing device R3 | Routing device R3 |

In this embodiment, the BIER routing information is generated based on the correspondence between the ID of the host and the address of the host and the correspondence between the address of the host and a next BIER neighbor, that is, the BIER routing information is generated through iteration. According to the iteration method, the routing device may flood the correspondence between the ID of the host and the address of the host without a need of extending the routing protocol, because the mapping between the ID of the host and the address of the host is statically configured on each routing device. In addition, the method enables a configuration on each routing device to be consistent, and each routing device only needs to maintain the same correspondence between the ID of the host and the address of the host, to avoid incorrect configuration caused by a different configuration of each device, or reduce a probability of incorrect configuration.

In comparison with the foregoing method, another static configuration method is to directly configure a next BIER neighbor of each BFR-ID or next BIER neighbors of a range of BFR-IDs without performing iteration. This may cause incorrect configuration when each routing device node is configured with different information and there are a large quantity of nodes. For example, the routing device R1 establishes the correspondence by using the following configurations.

| |
|---|
| BFR-neighbor BFR-ID 1 end-bier 2001:db8::1 stub PHP |
| BFR-neighbor BFR-ID 2 to 3 end-bier <R0> |

Similarly, the routing device R2 establishes, for example, the correspondence by using the following configurations.

| |
|---|
| BFR-neighbor BFR-ID 2 end-bier 2001:db8::2 stub PHP |
| BFR-neighbor BFR-ID 1 end-bier <R0> |
| BFR-neighbor BFR-ID 3 end-bier <R0> |

Similarly, the routing device R3 establishes, for example, two correspondences by using the following configurations.

| |
|---|
| BFR-neighbor BFR-ID 3 end-bier 2001:db8::3 stub PHP |
| BFR-neighbor BFR-ID 1 to 2 end-bier <R0> |

Similarly, the routing device R0 establishes, for example, two correspondences by using the following configurations.

| |
|---|
| BFR-neighbor BFR-ID 1 end-bier <R1> |
| BFR-neighbor BFR-ID 2 end-bier <R2> |
| BFR-neighbor BFR-ID 3 end-bier <R3> |

Each node of the routing device R0, the routing device R1, the routing device R2, and the routing device R3 can directly generate the BIER routing information based on these configurations, without performing iteration based on the two correspondences. However, a corresponding cost is that these nodes have different configurations, a quantity of configurations is large, and incorrect configuration may occur.

Regardless of which of the foregoing two configuration manners is used, packet forwarding on a data plane is the same. Details are as follows.

When the host H1 needs to send a packet to the host H2 and the host H3, the host H1 encapsulates the following packet and sends the packet to the routing device R1: (IPv6 header, IPv6 extension header <carrying BIER option>, UDP, UDP payload). Both the second bit and the third bit in a bitstring in the BIER option in the packet sent by the host H1 are 1, for example, the bitstring is 00000110.

After receiving the packet, the routing device R1 determines, based on a case that both the second bit and the third bit in the bitstring in the packet are 1, to send the packet to a node whose ID is 2 and a node whose ID is 3. Because in the routing information on the routing device R1, a BIER neighbor of a reachable host in an entry corresponding to the ID of 2 and a BIER neighbor of a reachable host in an entry corresponding to the ID of 3 are both the routing device R0, the routing device R1 sends the packet to the routing device R0 based on the routing information. In addition, the bitstring in the packet sent by the routing device R1 is still 00000110.

After receiving the packet, the routing device R0 determines, based on the case that both the second bit and the third bit in the bitstring in the packet are 1, to send the packet to the node whose ID is 2 and the node whose ID is 3. The routing device R0 duplicates the packet, updates the bitstring in the packet, and sends the packet with the updated bitstring to the routing device R2 and the routing device R3. The bitstring in the packet sent by the routing device R0 to the routing device R2 is updated to 00000010, and the bitstring in the packet sent by the routing device R0 to the routing device R3 is updated to 00000100.

After receiving the packet, the routing device R2 queries, based on a case that the second bit in the bitstring in the packet is 1, the routing information on the routing device R2 for an entry corresponding to the ID of 2. The routing device R2 determines, based on a case that a BIER neighbor of a reachable host in the entry corresponding to the ID of 2 is the host H2, that the packet needs to be sent to the host H2. The routing device R2 determines, based on the correspondence configured on the routing device R2, that a PHP operation needs to be performed on the packet when the packet is sent to the host H2. Therefore, the packet sent by the routing device R2 to the host H2 is as follows: (IPv6 header, UDP, UDP payload), where a destination address in the IPv6 header is 2001:db8::2 (an IPv6 address of the host H2).

After receiving the packet, the routing device R3 queries, based on a case that the third bit in the bitstring in the packet is 1, the routing information of the routing device R3 for an entry corresponding to the ID of 3. The routing device R3 determines, based on a case that a BIER neighbor of a reachable host in the entry corresponding to the ID of 3 is the host H3, that the packet needs to be sent to the host H3. The routing device R3 determines, based on the correspondence configured on the routing device R3, that a PHP operation needs to be performed on the packet when the packet is sent to the host H3. Therefore, the packet sent by the routing device R3 to the host H3 is as follows: (IPv6 header, UDP, UDP payload), where a destination address in the IPv6 header is 2001 :db8::3 (an IPv6 address of the host H3).

In a process of popping up the IPv6 extension header, optionally, the routing device R2 or the routing device R3 further updates a payload length field in the IPv6 header, and correspondingly updates a checksum field in the UDP header. Alternatively, optionally, the routing device R2 or the routing device R3 uses a UDP zero check method to keep the checksum field in the UDP header as 0.

### Instance 5: Comprehensive use cases

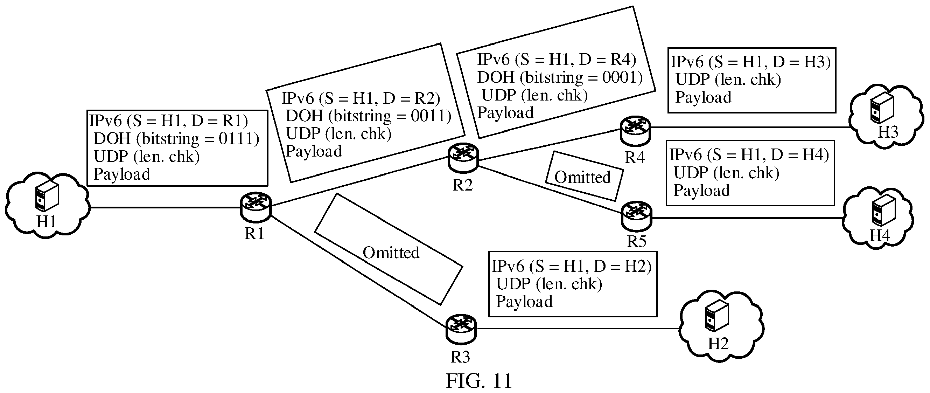

FIG. 11 is a schematic diagram of a scenario of Instance 5. With reference to FIG. 11, the second host in the method shown in FIG. 4 is a host H1 in FIG. 11, and the first packet in the method shown in FIG. 4 is a packet sent by the host H1. The first routing device in the method shown in FIG. 4 is a routing device R4 in FIG. 11, and the first host in the method shown in FIG. 4 is a host H3 in FIG. 11. In the method shown in FIG. 4, the second packet is a packet sent by the routing device R4. Alternatively, the first routing device in the method shown in FIG. 4 is a routing device R5 in FIG. 11, and the first host in the method shown in FIG. 4 is a host H4 in FIG. 11. In the method shown in FIG. 4, the second packet is a packet sent by the routing device R5. Alternatively, the first routing device in the method shown in FIG. 4 is a routing device R3 in FIG. 11, and the first host in the method shown in FIG. 4 is a host H2 in FIG. 11. In the method shown in FIG. 4, the second packet is a packet sent by the routing device R3.

In this embodiment, a routing protocol is run among a routing device R1, a routing device R2, the routing device R3, and the routing device R4, where the routing protocol is, for example, IS-IS, OSPF, or BGP

The host H1 sends a BIERv6 packet. For example, the packet sent by the host H1 is {IPv6 header, IPv6 destination options header DOH, UDP header, payload}. After passing through the routing device R1, the packet reaches the routing device R2 or the routing device R3. The routing device R2 forwards the packet to the routing device R4 and the routing device R5.

When receiving the packet, the routing device R3 identifies that a destination address of the packet is an End.BIER address of the routing device R3, and the routing device R3 pops up the IPv6 destination options header DOH when sending the packet to the host H2.

When receiving the packet, the routing device R4 identifies that the destination address of the packet is an End.BIER address of the routing device R4, and the routing device R4 pops up the IPv6 destination options header DOH when sending the packet to the host H3.

When receiving the packet, the routing device R5 identifies that the destination address of the packet is an End.BIER address of the routing device R5, and the routing device R5 pops up the IPv6 destination options header DOH when sending the packet to the host H4.

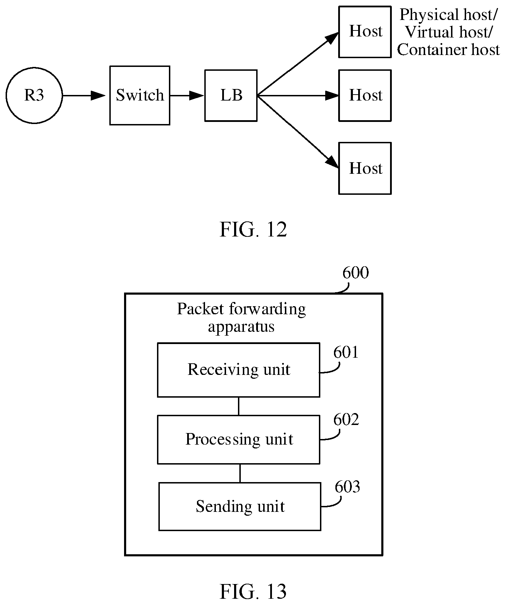

In a process in which the packet is sent from the routing device R3 to the host H2, the packet may further pass through another device. For example, the packet passes through a switch or a load balance device. When a packet sent by the routing device R3 first passes through the load balance device and then reaches the host H2, the destination address of the packet, for example, 2001:db8::2, may be an IP address of the load balance device, and the load balance device then distributes the packet to the host H2 following the load balance device. In this embodiment, the LB may also be considered as a host in this embodiment. This is not limited in this embodiment. FIG. 12 is a schematic diagram of networking that further includes a switch and a load balance device between a routing device and a host.

FIG. 13 is a schematic diagram of a structure of a packet forwarding apparatus 600 according to an embodiment of this application. The packet forwarding apparatus 600 includes a receiving unit 601, a processing unit 602, and a sending unit 603.

Optionally, with reference to the RTC scenario shown in FIG. 1, the packet forwarding apparatus 600 shown in FIG. 13 is disposed in the routing device R2 in FIG. 1.

Optionally, with reference to FIG. 2, the packet forwarding apparatus 600 shown in FIG. 13 is disposed in the routing device R1 in FIG. 2.

Optionally, with reference to FIG. 3, the packet forwarding apparatus 600 shown in FIG. 13 is disposed in the routing device R2 in FIG. 3 or the routing device R3 in FIG. 3.

Optionally, with reference to FIG. 4, the packet forwarding apparatus 600 shown in FIG. 13 is disposed in the first routing device in FIG. 4. The receiving unit 601 is configured to support the packet forwarding apparatus 600 in performing S402. The processing unit 602 is configured to support the packet forwarding apparatus 600 in performing S403. The sending unit 603 is configured to support the packet forwarding apparatus 600 in performing S404.

Optionally, with reference to FIG. 8, the packet forwarding apparatus 600 shown in FIG. 13 is disposed in the routing device R1 in FIG. 8.

Optionally, with reference to FIG. 9, the packet forwarding apparatus 600 shown in FIG. 13 is disposed in the routing device R2 in FIG. 9 or the routing device R3 in FIG. 9.

Optionally, with reference to FIG. 10, the packet forwarding apparatus 600 shown in FIG. 13 is disposed in the routing device R2 in FIG. 10 or the routing device R3 in FIG. 10.

Optionally, with reference to FIG. 11, the packet forwarding apparatus 600 shown in FIG. 13 is disposed in the routing device R3 in FIG. 11, the routing device R4 in FIG. 11, or the routing device R5 in FIG. 11.

The apparatus embodiment described in FIG. 13 is merely an example. For example, division into the units is merely logical function division. During actual implementation, another division manner may be used. For example, a plurality of units or components may be combined or integrated into another system, or some features may be ignored or not performed. Functional units in embodiments of this application may be integrated into one processing unit, or each of the units may exist alone physically, or two or more units may be integrated into one unit.

All or some of the units in the packet forwarding apparatus 600 are implemented by software, hardware, firmware, or any combination thereof.

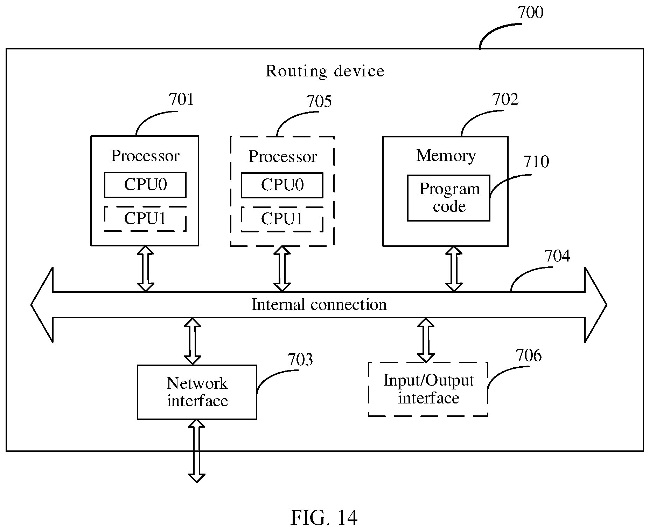

For example, with reference to FIG. 14, the processing unit 602 is implemented by a software functional unit generated after at least one processor 701 in FIG. 14 reads program code stored in a memory 702 in FIG. 14. Alternatively, the processing unit 602 is implemented by a part of processing resources (for example, one core or two cores in a multi-core processor) in the at least one processor 701 in FIG. 14, or is implemented by using a programmable device such as a field-programmable gate array (field-programmable gate array, FPGA) or a coprocessor. The receiving unit 601 and the sending unit 603 are implemented through a network interface 703 in FIG. 14.

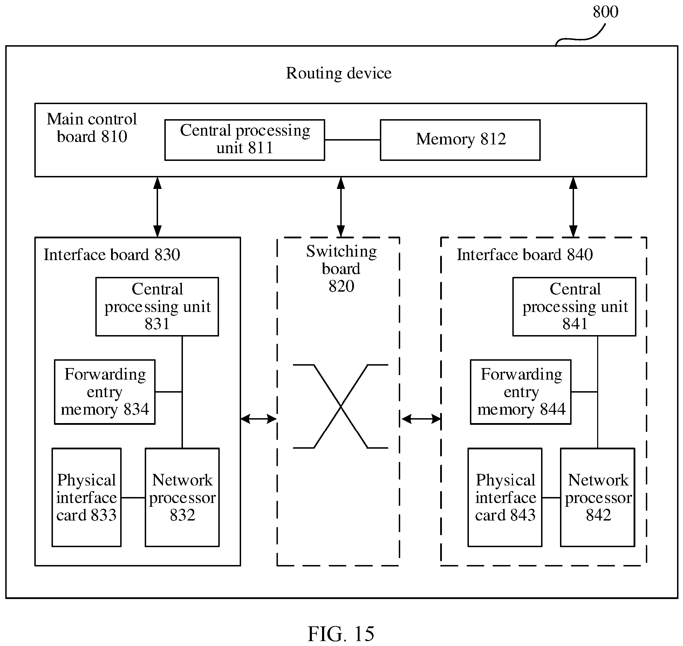

For another example, with reference to FIG. 14, the processing unit 602 is implemented by a software functional unit generated after a central processing unit 831 on an interface board 830, a network processor 832 on the interface board 830, or a central processing unit 811 on a main control board 810 in FIG. 15 reads program code stored in a memory. Alternatively, the processing unit 602 is implemented by the central processing unit 831 on the interface board 830, the network processor 832 on the interface board 830, or a part of processing resources (for example, one or two cores in a multi-core processor) in the central processing unit 811 on the main control board 810 in FIG. 14, or is implemented by using a programmable device such as a field-programmable gate array (field-programmable gate array, FPGA) or a coprocessor. The receiving unit 601 and the sending unit 603 are implemented by the network processor 832 and a physical interface card 833 that are on the interface board 830 in FIG. 14.

FIG. 14 is a schematic diagram of a structure of a routing device 700 according to an embodiment of this application. The routing device 700 includes at least one processor 701, the memory 702, and at least one network interface 703.

Optionally, with reference to the RTC scenario shown in FIG. 1, the routing device 700 shown in FIG. 14 is the routing device R2 in FIG. 1.

Optionally, with reference to FIG. 2, the routing device 700 shown in FIG. 14 is the routing device R1 in FIG. 2.

Optionally, with reference to FIG. 3, the routing device 700 shown in FIG. 14 is the routing device R2 in FIG. 3 or the routing device R3 in FIG. 3.

Optionally, with reference to FIG. 4, the routing device 700 shown in FIG. 14 is the first routing device in FIG. 4. The network interface 703 is configured to support the routing device 700 in performing S402 and S404. The processor 701 is configured to support the routing device 700 in performing S403.

Optionally, with reference to FIG. 8, the routing device 700 shown in FIG. 14 is the routing device R1 in FIG. 8.

Optionally, with reference to FIG. 9, the routing device 700 shown in FIG. 14 is the routing device R2 in FIG. 9 or the routing device R3 in FIG. 9.

Optionally, with reference to FIG. 10, the routing device 700 shown in FIG. 14 is the routing device R2 in FIG. 10 or the routing device R3 in FIG. 10.

Optionally, with reference to FIG. 11, the routing device 700 shown in FIG. 14 is the routing device R3 in FIG. 11, the routing device R4 in FIG. 11, or the routing device R5 in FIG. 11.

The processor 701 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 701 includes an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The memory 702 is, for example, a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. Optionally, the memory 702 exists independently, and is connected to the processor 701 through an internal connection 704. Alternatively, optionally, the memory 702 and the processor 701 are integrated together.

The network interface 703 is any apparatus of a transceiver type and is configured to communicate with another device or a communication network. The network interface 703 includes, for example, a wired network interface and/or a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 701 includes one or more CPUs, for example, a CPU0 and a CPU1 shown in FIG. 14.

In some embodiments, the routing device 700 optionally includes a plurality of processors, for example, the processor 701 and a processor 705 that are shown in FIG. 14. Each of these processors is, for example, a single-core processor (single-CPU) or a multi-core processor (multi-CPU). The processor optionally refers to one or more devices, circuits, and/or processing cores configured to process data (for example, computer program instructions).

In some embodiments, the routing device 700 further includes the internal connection 704. The processor 701, the memory 702, and the at least one network interface 703 are connected through the internal connection 704. The internal connection 704 includes a channel for transmitting information between the foregoing components. Optionally, the internal connection 704 is a board or a bus. Optionally, the internal connection 704 includes an address bus, a data bus, a control bus, and the like.

In some embodiments, the routing device 700 further includes an input/output interface 706. The input/output interface 706 is connected to the internal connection 704.

Optionally, the processor 701 implements the method according to the foregoing embodiments by reading program code 710 stored in the memory 702, or the processor 701 implements the method according to the foregoing embodiments through program code stored internally. When the processor 701 implements the method according to the foregoing embodiments by reading the program code 710 stored in the memory 702, the memory 702 stores the program code for implementing the method according to embodiments of this application.

For more details of implementing the foregoing functions by the processor 701, refer to the descriptions in the foregoing method embodiments. Details are not described herein again.

FIG. 15 is a schematic diagram of a structure of a routing device 800 according to an embodiment of this application. The routing device 800 includes a main control board 810 and an interface board 830.

Optionally, with reference to the RTC scenario shown in FIG. 1, the routing device 800 shown in FIG. 15 is the routing device R2 in FIG. 1.

Optionally, with reference to FIG. 2, the routing device 800 shown in FIG. 15 is the routing device R1 in FIG. 2.

Optionally, with reference to FIG. 3, the routing device 800 shown in FIG. 15 is the routing device R2 in FIG. 3 or the routing device R3 in FIG. 3.

Optionally, with reference to FIG. 4, the routing device 800 shown in FIG. 15 is the first routing device in FIG. 4. The network interface 703 is configured to support the routing device 700 in performing S402 and S404. The processor 701 is configured to support the routing device 700 in performing S403.

Optionally, with reference to FIG. 8, the routing device 800 shown in FIG. 15 is the routing device R1 in FIG. 8.

Optionally, with reference to FIG. 9, the routing device 800 shown in FIG. 15 is the routing device R2 in FIG. 9 or the routing device R3 in FIG. 9.

Optionally, with reference to FIG. 10, the routing device 800 shown in FIG. 15 is the routing device R2 in FIG. 10 or the routing device R3 in FIG. 10.

Optionally, with reference to FIG. 11, the routing device 800 shown in FIG. 15 is the routing device R3 in FIG. 11, the routing device R4 in FIG. 11, or the routing device R5 in FIG. 11.

The main control board 810 is also referred to as a main processing unit (main processing unit, MPU) or a route processor card (route processor card). The main control board 810 is configured to control and manage components in the routing device 800, including functions such as routing calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to provide various service interfaces, and forward a data packet. The service interface includes, but is not limited to, an Ethernet interface, a POS (packet over SONET/SDH) interface, and the like. The Ethernet interface is, for example, a flexible Ethernet service interface (flexible ethernet client, FlexE client). The interface board 830 includes a central processing unit 831, a network processor 832, a forwarding entry memory 834, and a physical interface card (physical interface card, PIC) 833.

The central processing unit 831 on the interface board 830 is configured to control and manage the interface board 830, and communicate with the central processing unit 811 on the main control board 810.

The network processor 832 is configured to forward a packet. A form of the network processor 832, is for example, a forwarding chip. Specifically, the network processor 832 is configured to forward a received packet based on a forwarding table stored in the forwarding entry memory 834. If a destination address of the packet is an address of the routing device 800, the network processor 832 sends the packet to a CPU (for example, the central processing unit 811) for processing. If the destination address of the packet is not the address of the routing device 800, the network processor 832 searches for, based on the destination address, a next hop and an outbound interface corresponding to the destination address in the forwarding table, and forwards the packet to the outbound interface corresponding to the destination address. Processing of an uplink packet includes: processing an inbound interface of the packet, and searching the forwarding table. Processing of a downlink packet includes: searching the forwarding table, and the like.

A physical interface card 833 is configured to implement a physical layer interconnection function. Original traffic enters the interface board 830 from the physical interface card 833, and a processed packet is sent out from the physical interface card 833. The physical interface card 833, also referred to as a subcard, may be mounted on the interface board 830, and is responsible for converting an optical/electrical signal into a packet, performing validity check on the packet, and forwarding the packet to the network processor 832 for processing. In some embodiments, the central processing unit may also perform a function of the network processor 832, for example, implement software forwarding based on a general-purpose CPU. Therefore, the network processor 832 is not required in the physical interface card 833.

Optionally, the routing device 800 includes a plurality of interface boards. For example, the routing device 800 further includes an interface board 840, and the interface board 840 includes a central processing unit 841, a network processor 842, a forwarding entry memory 844, and a physical interface card 843.

Optionally, the routing device 800 further includes a switching board 820. The switching board 820 is, for example, also referred to as a switch fabric unit (switch fabric unit, SFU). When a network device has a plurality of interface boards 830, the switching board 820 is configured to complete data exchange between the interface boards. For example, the interface board 830 and the interface board 840 communicate with each other via the switching board 820.

The main control board 810 is coupled to the interface board 830. For example, the main control board 810, the interface board 830, the interface board 840, and the switching board 820 are connected to a system backplane by using a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the routing device 800 includes a control plane and a forwarding plane. The control plane includes the main control board 810 and the central processing unit 831. The forwarding plane includes components that perform forwarding, such as the forwarding entry memory 834, the physical interface card 833, and the network processor 832. The control plane performs functions such as routing, generating a forwarding table, processing signaling and a protocol packet, and configuring and maintaining a device status. The control plane delivers the generated forwarding table to the forwarding plane. On the forwarding plane, the network processor 832 performs, based on the forwarding table delivered by the control plane, table lookup and forwarding on a packet received by the physical interface card 833. The forwarding table delivered by the control plane is stored, for example, in the forwarding entry memory 834. In some embodiments, the control plane and the forwarding plane are, for example, completely separated, and are not on a same device.

An operation on the interface board 840 is consistent with an operation on the interface board 830. For brevity, details are not described again. The routing device 800 in this embodiment may correspond to the first routing device in the foregoing method embodiments. The main control board 810, the interface board 830, and/or the interface board 840 in the routing device 800 implement, for example, functions of the first routing device and/or various steps implemented by the first routing device in the foregoing method embodiments. For brevity, details are not described herein again.

There may be one or more main control boards. When there are a plurality of main control boards, the main control boards include, for example, an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may need no switching board, and an interface board performs a function of processing service data of an entire system. In a distributed forwarding architecture, a network device may have at least one switching board, and implements data exchange between a plurality of interface boards by using the switching board, providing large-capacity data exchange and processing capabilities. Therefore, a data access and processing capability of a network device in the distributed architecture is greater than that of a device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained by combining the two central processing units. This form of device (for example, a network device such as a low-end switch or a router) has a low data exchange and processing capability. A specific architecture that is to be used depends on a specific networking deployment scenario. This is not limited herein.

Embodiments in this specification are all described in a progressive manner, for same or similar parts in embodiments, reference may be made to each other, and each embodiment focuses on a difference from other embodiments.

Making reference to B for A means that A is the same as B or that A is a simple variant of B.

In the specification and claims in embodiments of this application, the terms "first", "second", and the like are for distinguishing between different objects, but are not intended to describe a specific order of the objects, and cannot be understood as an indication or implication of relative importance. For example, the first packet and the second packet are used to distinguish between different packets, but are not intended to describe a specific order of the packets, and cannot be understood that the first packet is more important than the second packet.

In embodiments of this application, unless otherwise specified, "at least one" means one or more, and "a plurality of" means two or more. For example, a plurality of IPv6 extension headers refers to two or more IPv6 extension headers.

The foregoing embodiments may be wholly or partially implemented by using software, hardware, firmware, or any combination thereof. When software is used to implement the embodiments, the embodiments may be wholly or partially implemented in a form of a computer program product. The computer program product includes one or more computer instructions. When the computer program instructions are loaded and executed on a computer, the processes or functions according to embodiments of this application are wholly or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A packet forwarding method, wherein the method comprises:
receiving, by a first routing device, a first packet, wherein the first packet comprises a first internet protocol version 6 IPv6 header, a first IPv6 extension header, an upper-layer header, and an upper-layer payload, and the first IPv6 extension header comprises a bit index explicit replication BIER option;
obtaining, by the first routing device, a second packet based on the first packet, wherein the second packet comprises the upper-layer header, the upper-layer payload, and a second IPv6 header obtained based on the first IPv6 header; and
sending, by the first routing device, the second packet to a first host serving as a BIER neighbor.

2. The method according to claim 1, wherein the BIER option comprises a bitstring, and the obtaining, by the first routing device, a second packet based on the first packet comprises:
obtaining, by the first routing device, indication information based on the bitstring, wherein the indication information indicates to pop up the first IPv6 extension header comprising the BIER option; and
obtaining, by the first routing device, the second packet based on the indication information and the first packet.

3. The method according to claim 2, wherein the obtaining, by the first routing device, indication information based on the bitstring comprises:
obtaining, by the first routing device, an identifier of the first host based on the bitstring; and
obtaining, by the first routing device, the indication information based on a correspondence and the identifier of the first host, wherein the correspondence comprises the indication information and the identifier of the first host.

4. The method according to any one of claims 1 to 3, wherein the upper-layer header is a user datagram protocol UDP header, and the upper-layer payload is a UDP payload.

5. The method according to any one of claims 1 to 4, wherein the first packet further comprises at least one second IPv6 extension header, the at least one second IPv6 extension header comprised in the first packet is encapsulated between the first IPv6 header and the upper-layer header, the second packet further comprises the at least one second IPv6 extension header, the at least one second IPv6 extension header comprised in the second packet is encapsulated between the second IPv6 header and the upper-layer header, and the at least one second IPv6 extension header does not comprise the BIER option.

6. The method according to any one of claims 1 to 5, wherein the BIER option of the first packet comprises the bitstring, the bitstring comprises a first bit corresponding to the identifier of the first host, the first bit in the bitstring is set, and before the receiving, by a first routing device, a first packet, the method further comprises:
advertising, by the first routing device, the identifier of the first host between routing devices in a BIER domain.

7. The method according to claim 6, wherein the advertising, by the first routing device, the identifier of the first host between routing devices in a BIER domain comprises:
generating, by the first routing device, a routing protocol packet, wherein the routing protocol packet comprises the identifier of the first host, and the routing protocol packet is an intermediate system to intermediate system IS-IS packet, an open shortest path first OSPF packet, or a border gateway protocol BGP packet; and
advertising, by the first routing device, the routing protocol packet between the routing devices in the BIER domain.

8. A packet forwarding method, wherein the method comprises:
receiving, by a first routing device, a first packet, wherein the first packet comprises an internet protocol version 6 IPv6 header, a first IPv6 extension header, an upper-layer header, and an upper-layer payload, and the first IPv6 extension header comprises a bit index explicit replication BIER option;
obtaining, by the first routing device, a second packet based on the first packet, wherein the second packet comprises the upper-layer header, the upper-layer payload, and an IPv4 header obtained based on the IPv6 header; and
sending, by the first routing device, the second packet to a first host serving as a BIER neighbor.

9. The method according to claim 8, wherein the BIER option comprises a bitstring, and the obtaining, by the first routing device, a second packet based on the first packet comprises:
obtaining, by the first routing device, indication information and an IPv4 address of the first host based on the bitstring, wherein the indication information indicates the first IPv6 extension header comprising the BIER option and indicates to replace the IPv6 header with the IPv4 header; and
obtaining, by the first routing device, the second packet based on the indication information, the IPv4 address of the first host, and the first packet, wherein a destination address in the IPv4 header of the second packet is the IPv4 address of the first host.

10. The method according to claim 9, wherein the obtaining, by the first routing device, indication information and an IPv4 address of the first host based on the bitstring comprises:
obtaining, by the first routing device, an identifier of the first host based on the bitstring; and
obtaining, by the first routing device, the indication information and the IPv4 address of the first host based on a first correspondence and the identifier of the first host, wherein the first correspondence comprises the indication information, the identifier of the first host, and the IPv4 address of the first host.

11. The method according to any one of claims 8 to 10, wherein the upper-layer header is a user datagram protocol UDP header, and the upper-layer payload is a UDP payload.

12. The method according to any one of claims 8 to 11, wherein the first packet further comprises at least one second IPv6 extension header, and the at least one second IPv6 extension header in the first packet is encapsulated between the IPv6 header and the upper-layer header.

13. The method according to any one of claims 8 to 12, wherein the BIER option of the first packet comprises the bitstring, the bitstring comprises a first bit corresponding to the identifier of the first host, the first bit in the bitstring is set, and before the receiving, by a first routing device, a first packet, the method further comprises:
advertising, by the first routing device, the identifier of the first host between routing devices in a BIER domain.

14. The method according to any one of claims 8 to 13, wherein the method further comprises:
advertising, by the first routing device between the routing devices in the BIER domain, a correspondence between an IPv6 address of the first host and the IPv4 address of the first host.

15. A packet forwarding apparatus, wherein the apparatus is disposed in a first routing device, and the apparatus comprises:
a receiving unit, configured to receive a first packet, wherein the first packet comprises a first internet protocol version 6 IPv6 header, a first IPv6 extension header, an upper-layer header, and an upper-layer payload, and the first IPv6 extension header comprises a bit index explicit replication BIER option;
a processing unit, configured to obtain a second packet based on the first packet, wherein the second packet comprises the upper-layer header, the upper-layer payload, and a second IPv6 header obtained based on the first IPv6 header; and
a sending unit, configured to send the second packet to a first host serving as a BIER neighbor.

16. The apparatus according to claim 15, wherein the BIER option comprises a bitstring, and the processing unit is configured to: obtain indication information based on the bitstring, wherein the indication information indicates to pop up the first IPv6 extension header comprising the BIER option; and obtain the second packet based on the indication information and the first packet.

17. The apparatus according to claim 16, wherein the processing unit is configured to: obtain an identifier of the first host based on the bitstring; and obtain the indication information based on a correspondence and the identifier of the first host, wherein the correspondence comprises the indication information and the identifier of the first host.

18. The apparatus according to any one of claims 15 to 17, wherein the BIER option of the first packet comprises the bitstring, the bitstring comprises a first bit corresponding to the identifier of the first host, the first bit in the bitstring is set, and the sending unit is further configured to advertise the identifier of the first host between routing devices in a BIER domain.

19. The apparatus according to claim 18, wherein
the processing unit is further configured to generate a routing protocol packet, wherein the routing protocol packet comprises the identifier of the first host, and the routing protocol packet is an intermediate system to intermediate system IS-IS packet, an open shortest path first OSPF packet, or a border gateway protocol BGP packet; and
the sending unit is configured to advertise the routing protocol packet between the routing devices in the BIER domain.

20. A packet forwarding apparatus, wherein the apparatus is disposed in a first routing device, and the apparatus comprises:
a receiving unit, configured to receive a first packet, wherein the first packet comprises an internet protocol version 6 IPv6 header, a first IPv6 extension header, an upper-layer header, and an upper-layer payload, and the first IPv6 extension header comprises a bit index explicit replication BIER option;
a processing unit, configured to obtain a second packet based on the first packet, wherein the second packet comprises the upper-layer header, the upper-layer payload, and an IPv4 header obtained based on the IPv6 header; and
a sending unit, configured to send the second packet to a first host serving as a BIER neighbor.

21. The apparatus according to claim 20, wherein the BIER option comprises a bitstring, and the processing unit is configured to: obtain indication information and an IPv4 address of the first host based on the bitstring, wherein the indication information indicates the first IPv6 extension header comprising the BIER option and indicates to replace the IPv6 header with the IPv4 header; and obtain the second packet based on the indication information, the IPv4 address of the first host, and the first packet, wherein a destination address in the IPv4 header of the second packet is the IPv4 address of the first host.

22. The apparatus according to claim 21, wherein the processing unit is configured to: obtain an identifier of the first host based on the bitstring; and obtain the indication information and the IPv4 address of the first host based on a first correspondence and the identifier of the first host, wherein the first correspondence comprises the indication information, the identifier of the first host, and the IPv4 address of the first host.

23. The apparatus according to any one of claims 20 to 22, wherein the BIER option of the first packet comprises the bitstring, the bitstring comprises a first bit corresponding to the identifier of the first host, the first bit in the bitstring is set, and the sending unit is further configured to advertise the identifier of the first host between routing devices in a BIER domain.

24. The apparatus according to any one of claims 20 to 23, wherein the sending unit is further configured to advertise, between the routing devices in the BIER domain, a correspondence between an IPv6 address of the first host and the IPv4 address of the first host.

25. A routing device, wherein the routing device comprises a processor, the processor is coupled to a memory, the memory stores at least one computer program instruction, and the at least one computer program instruction is loaded and executed by the processor, to enable the routing device to implement the method according to any one of claims 1 to 14.

26. A computer-readable storage medium, wherein the storage medium stores at least one instruction, and when the instruction is run on a computer, the computer is enabled to perform the method according to any one of claims 1 to 14.
